# EUROPÄISCHE PATENTSCHRIFT

(11) **EP 3 433 825 B1**
(45) Veröffentlichungstag und Bekanntmachung des Hinweises auf die Patenterteilung: **06.05.2020**
(21) Anmeldenummer: 17713248.7
(22) Anmeldetag: 23.03.2017
(51) Int. Cl.: G06Q 50/06, H02J 3/14

(54) **VERFAHREN ZUM STEUERN EINER MULTIVALENTEN ENERGIEVERSORGUNGSANLAGE**
METHOD FOR CONTROLLING A MULTIVALENT ENERGY SUPPLY INSTALLATION
PROCÉDÉ DE COMMANDE D'UN SYSTÈME D'ALIMENTATION EN ÉNERGIE ÉLECTRIQUE MULTIVALENT

(30) Priorität: 24.03.2016 DE 102016205030
(43) Veröffentlichungstag der Anmeldung: 30.01.2019
(73) Patentinhaber: Viessmann Werke GmbH & Co. KG, 35108 Allendorf (DE)
(72) Erfinder: ARNOLD, Christian, 36119 Neuhof (DE); BOCK, Martin, 35110 Frankenau (DE); GRAD, Andrej, 35088 Battenberg (DE); MAURER, Tobias, 35108 Allendorf (DE); OSTERLOH, Reinhard, 59955 Winterberg (DE); TIMMERMANN, Jörg, 35088 Battenberg (DE)
(74) Vertreter: MERH-IP Matias Erny Reichl Hoffmann Patentanwälte PartG mbB
(86) Internationale Anmeldenummer: PCT/EP2017/056929
(87) Internationale Veröffentlichungsnummer: WO 2017/162795

(56) Entgegenhaltungen:
- EP-A2- 1 202 425
- US-A1- 2011 071 690
- US-A1- 2013 140 885

## Beschreibung

Die vorliegende Erfindung betrifft ein Verfahren zum Steuern einer multivalenten Energieversorgungsanlage mit mindestens zwei Energieerzeugern, die mindestens zwei verschiedene Energieträger nutzen, um Energie in Form von Wärme und/oder Kälte und/oder elektrischer Energie bereitzustellen. Die Erfindung betrifft ferner eine Steuereinrichtung zum Steuern einer multivalenten Energieversorgungsanlage.

Ein Verfahren zum Betreiben eines Systems mit mehreren Wärmeerzeugungseinrichtungen ist beispielsweise aus der EP 2187136 A2 bekannt. Das System kann Wärmeleistung unter Verwendung mehrerer Wärmeerzeugungseinrichtungen bereitstellen, wobei die Verteilung der Wärmeleistung auf die einzelnen Wärmeerzeugungseinrichtungen variabel ist, so dass diese nahe an ihrem optimalen Wirkungsgrad betrieben werden können. Die Zuteilung der Leistung kann nicht nur über ein übergeordnetes Kesselmanagementsystem erfolgen, sondern auch durch Abstimmung der einzelnen Wärmeerzeugungseinrichtungen untereinander erfolgen.

Aus der internationalen Patentanmeldung WO 2009/141176 A1 ist ein mobiles Heizsystem bekannt, das eine Mehrzahl von brennstoffbetriebenen Heizgeräten aufweist, die über ein Bussystem miteinander in Kommunikationsverbindung stehen. Das Heizsystem ist derart eingerichtet, dass sich beim Starten des Heizsystems, basierend auf vorbestimmten Regeln, eines der Heizgeräte als Master bezüglich der Ansteuerung von weiteren, an das Bussystem angeschlossenen Heizgeräten konfiguriert. Die verbleibenden Heizgeräte werden als Slaves konfiguriert.

Die europäische Patentanmeldung EP 2144130 A1 offenbart ein Gruppenverwaltungssystem, das eine Vielzahl von Vorrichtungen kollektiv steuern kann und ein flexibles Hinzufügen oder Ändern von Vorrichtungsgruppen erlaubt.

Ein hybrides Heizsystem bestehend aus mindestens einem Brennwertkessel und mindestens einem Nicht-Brennwertkessel ist aus der internationalen Patentanmeldung WO 2008/091970 A2 bekannt. Das Zu- beziehungsweise Abschalten der einzelnen Kessel durch eine Steuerung erfolgt nach Bestimmung der Heizlast unter anderem auf Basis des Flusses in der Hauptleitung des Heizsystems sowie weiterer Startkriterien. Die Auswahl der Kessel erfolgt ferner in Abhängigkeit der Außentemperatur sowie der Betriebsstunden der einzelnen Kessel.

Die US Patentanmeldung US 2013/140885 A1 befasst sich mit dem Steuern einer Vielzahl von Energielasten und Energieerzeugern, um eine Energiebereitstellungsanforderung zu erfüllen. Die Lasten und Erzeuger können einzelnen Fahrzeugen, Gebäuden, Gebäudekomplexen oder anderen physikalischen Objekten zugeordnet sein. Die Energieerzeuger können eine Vielzahl verschiedener Betriebszustände einnehmen und es werden verschiedene Energieträger offenbart.

In der europäischen Patentanmeldung EP 1202425 A2 wird ein System zum Planen einer Energieversorgung sowie zum koordinierten Verwalten der Energiezufuhr an Energieverbraucher beschrieben. Als Energieerzeuger werden Kraftwerke wie zum Beispiel Kernkraftwerke, Wasserkraftwerke und Solarkraftwerke, also insbesondere Großkraftwerke offenbart.

Die US Patentanmeldung US 2011/071690 A1 betrifft das Verwalten eines Energienetzes, wobei insbesondere das Steuern von Großkraftwerken beschrieben wird.

Der vorliegenden Erfindung liegt die Aufgabe zugrunde, ein Verfahren zum Steuern einer multivalenten Energieversorgungsanlage anzugeben, womit eine im Vergleich zum Stand der Technik verbesserte Ausnutzung von gegenwärtig verfügbaren Energieressourcen erzielt werden kann. Insbesondere soll ein Verfahren zum Steuern einer multivalenten Energieversorgungsanlage bereitgestellt werden, das erzeugerspezifische Kriterien berücksichtigt, welche sich beispielsweise aus der Verwendung verschiedener Energieträger ergeben können. Durch das Berücksichtigen von erzeugerspezifischen Kriterien kann zudem erreicht werden, dass die Nutzungsdauer der Energieerzeuger besonders gleichmäßig verteilt wird, wodurch ein schonender Betrieb und eine große Lebensdauer der Energieerzeuger ermöglicht werden können. Ferner ist hierdurch ein besonders sicherer Betrieb der Energieversorgungsanlage erreichbar.

Der vorliegenden Erfindung liegt außerdem die Aufgabe zugrunde, ein Verfahren zum Steuern einer multivalenten Energieversorgungsanlage anzugeben, womit eine im Vergleich zum Stand der Technik verbesserte Regelgüte erzielt werden kann. Die Regelgüte beschreibt das Verhalten einer Regelung. Eine hohe (oder gute) Regelgüte bedeutet hierbei, dass ein bestimmter geforderter Sollwert in besonders kurzer Zeit erreicht werden kann. Eine niedrige (oder schlechte) Regelgüte bedeutet, dass ein bestimmter geforderter Sollwert erst in einer relativ langen Zeit erreicht wird. Die vorliegende Erfindung zielt somit darauf ab, die Steuerung einer multivalenten Energieversorgungsanlage dahingehend zu verbessern, dass die Zeit zum Erreichen eines bestimmten vorgegebenen Sollwerts, beziehungsweise zum Erfüllen einer Energiebereitstellungsanforderung besonders gering ist.

Bei herkömmlichen Steuerverfahren für eine Vielzahl von Energieerzeugern einer Energieversorgungsanlage werden die einzelnen Energieerzeuger sequentiell entlang einer vorab festgelegten Reihenfolge ein- beziehungsweise ausgeschaltet. Das Einschalten des in der Reihenfolge nächsten Energieerzeugers erfolgt immer dann, wenn der momentane Energiebedarf nicht mehr durch die bereits eingeschalteten Energieerzeuger erfüllt werden kann. Entsprechend werden Energieerzeuger ausgeschaltet, wenn die bereitgestellte Energiemenge den angeforderten Bedarf überschreitet. Hierbei kann es dazu kommen, dass ein nur sehr langsam einschaltbarer und/oder regelbarer Energieerzeuger ein Einschalten eines folgenden Energieerzeugers in der Reihenfolge blockiert, so dass eine sehr lange Zeit nötig sein kann, um einen Bedarf zu erfüllen.

Bei einem weiteren bekannten Steuerverfahren für eine Vielzahl von Energieerzeugern einer Energieversorgungsanlage werden die einzelnen Energieerzeuger unabhängig voneinander (parallel) ein- und/oder ausgeschaltet und geregelt. Die Steuerung erfolgt somit völlig unkoordiniert. Restriktionen beziehungsweise spezifische Eigenschaften einzelner Energieerzeuger können bei der Steuerung der Energieversorgungsanlage nicht berücksichtigt werden.

Das erfindungsgemäße Steuerverfahren zielt darauf ab, die Vorteile einer sequentiellen Steuerung mit denen einer parallelen Steuerung von Energieerzeugern zu kombinieren. Dazu werden die Energieerzeuger in Gruppen eingeteilt, wobei innerhalb einer Gruppe eine variable Reihenfolge der Energieerzeuger festgelegt wird. Ferner kann eine als Kaskade bezeichnete Reihenfolge von Gruppen festgelegt werden, wobei eine Kaskade ein oder mehrere Gruppen umfasst.

Eine Kaskade ist somit eine den Gruppen übergeordnete Ebene der Einteilung der Energieerzeuger und legt jeweils eine sequenzielle Reihenfolge der in ihr enthaltenen Energieerzeuger fest. Kaskaden sind jedoch unabhängig voneinander steuerbar. Somit können mehrere parallel ausführbare sequenzielle Reihenfolgen von Energieerzeugern definiert werden, wobei jeweils unterschiedliche Kriterien für das Einschalten und/oder Ausschalten festgelegt werden können.

Einzelne Kaskaden können parallel zueinander gesteuert werden. Hiermit wird erreicht, dass mehrere parallel zueinander steuerbare Reihenfolgen festgelegt werden können. Hierdurch kann die Steuerung einer multivalenten Energieversorgungsanlage besonders gut auf sich ändernde Bedingungen reagieren. Ferner können unterschiedliche spezifische Eigenschaften der Energieerzeuger besonderes gut miteinander kombiniert und das Ein- und/oder Ausschalten der Energieerzeuger besonders gut koordiniert werden.
Die Lösung der Aufgabe gelingt durch Angeben eines Verfahrens zum Steuern einer multivalenten Energieversorgungsanlage, wobei die multivalente Energieversorgungsanlage mindestens zwei Energieerzeuger umfasst, die mindestens zwei verschiedene Energieträger nutzen, um Energie in Form von Wärme und/oder Kälte und/oder elektrischer Energie bereitzustellen. Jeder Energieerzeuger umfasst eine Regeleinrichtung zum Regeln von Regelgrößen des Energieerzeugers. Erfindungsgemäß erfasst eine Steuereinrichtung mindestens eine Energiebereitstellungsanforderung für jeweils mindestens eine Energieform Wärme und/oder Kälte und/oder elektrische Energie.

Jeder der Energieerzeuger kann drei mögliche Schaltzustände einnehmen. Entweder muss der Energieerzeuger eingeschaltet sein oder der Energieerzeuger muss ausgeschaltet sein oder der Energieerzeuger darf eingeschaltet oder ausgeschaltet sein. Befindet sich ein Energieerzeuger in dem ersten der drei genannten Schaltzustände darf er nicht ausgeschaltet werden. Befindet sich ein Energieerzeuger in dem zweiten der drei genannten Schaltzustände darf er nicht eingeschaltet werden. Diese beiden Schaltzustände können ein häufiges Ein- und Ausschalten von Energieerzeugern verhindern. Im dritten der drei genannten Schaltzustände kann die Steuereinrichtung entscheiden, ob der Energieerzeuger ein- oder ausgeschaltet werden soll.

Für jeden der Energieerzeuger bestimmt die Steuereinrichtung, ob ein energieerzeugerspezifisches Kriterium besteht, wobei das Ergebnis des Erfassens genau einen der drei mögliche Schaltzustände umfasst.

Darüber hinaus können energieerzeugerspezifische Kriterien bestehen, die zum Beispiel minimale und maximale Sollwertgrenzen für den Betrieb des Energieerzeugers festlegen.

Für jeden der Vielzahl von Energieerzeugern bestimmt die Steuereinrichtung Sollwerte in Abhängigkeit der mindestens einen Energiebereitstellungsanforderung und des energieerzeugerspezifischen Kriteriums und gibt die Sollwerte an die Regeleinrichtungen aus. Beim Bestimmen der Sollwerte berücksichtigt die Steuereinrichtung also, ob die Energieerzeuger ein- oder ausgeschaltet werden dürfen. So kann die Steuereinrichtung zum Beispiel dafür ausgelegt sein, zu prüfen, ob eine Energiebereitstellungsanforderung durch Energieerzeuger erfüllt werden kann, die aktuell eingeschaltet sein müssen. Wenn weitere Energieerzeuger erforderlich sind, um die Energiebereitstellungsanforderung zu erfüllen, können nur solche Energieerzeuger eingeschaltet werden, die nicht ausgeschaltet sein müssen.

Die Lösung der Aufgabe gelingt außerdem durch bereitstellen einer Steuereinrichtung zum Steuern einer multivalenten Energieversorgungsanlage, wobei die multivalente Energieversorgungsanlage mindestens zwei Energieerzeuger umfasst, die mindestens zwei verschiedene Energieträger nutzen, um Energie in Form von Wärme und/oder Kälte und/oder elektrischer Energie bereitzustellen. Jeder Energieerzeuger umfasst eine Regeleinrichtung zum Regeln von Regelgrößen des Energieerzeugers.

Erfindungsgemäß umfasst die Steuereinrichtung eine Anforderungserfassungseinrichtung zum Erfassen mindestens einer Energiebereitstellungsanforderung für jeweils mindestens eine Energieform Wärme und/oder Kälte und/oder elektrische Energie. Die Steuereinrichtung umfass zudem eine Kriterienbestimmungseinrichtung, die dafür ausgelegt ist, für jeden der Energieerzeuger zu bestimmen, ob ein energieerzeugerspezifisches Kriterium vorliegt, welches für den Energieerzeuger genau einen der drei möglichen Schaltzustände festlegt.

Ferner umfasst die Steuereinrichtung eine Sollwertbestimmungseinrichtung zum Bestimmen von Sollwerten für jeden Energieerzeuger zum Erfüllen der mindestens einen Energiebereitstellungsanforderung in Abhängigkeit des energieerzeugerspezifischen Kriteriums zu bestimmen. Die Steuereinrichtung umfasst außerdem eine Sollwertausgabeeinrichtung zum Ausgeben der Sollwerte an die Regeleinrichtungen.

Die Steuerung von multivalenten Energieversorgungsanlagen kann sehr komplex sein und erfordert in der Regel eine auf die konkrete Anlagenkonfiguration angepasste, maßgeschneiderte Lösung, wie zum Beispiel eine Speicherprogrammierbare Steuerung. Der Entwicklungsaufwand und die damit verbundenen Kosten zum Bereitstellen einer Anlagensteuerung können je nach Komplexität der Energieversorgungsanlage sehr hoch ausfallen. Außerdem kann bei der Installation einer Energieversorgungsanlage die Konfiguration einer entsprechenden Steuerung sehr kompliziert und zeitintensiv sein. Ziel der Erfindung ist es daher, Verfahren bereitzustellen, die es erlauben eine Vielzahl verschiedener multivalenter Energieversorgungsanlagen mit unterschiedlich aufgebauten Infrastrukturen und unterschiedlichen Komponenten optimal zu steuern. Außerdem soll eine Steuereinrichtung bereitgestellt werden, die eine Vielzahl verschiedener multivalenter Energieversorgungsanlagen optimal steuern kann.

Die erfindungsgemäße Steuereinrichtung kann dafür ausgelegt sein, die erfindungsgemäßen Verfahren zum Steuern einer multivalenten Energieversorgungsanlage ausführen. Insbesondere kann die Steuereinrichtung eine Vielzahl unterschiedlicher Anlagenkonfigurationen steuern, ohne für jede neue oder geänderte Anlagenkonfiguration neu programmiert oder konfiguriert zu werden.

Das Steuern einer multivalenten Energieversorgungsanlage erfindungsgemäß vereinfacht werden, indem eine Vielzahl von Kriterien in abgestufter Prioritätsreihenfolge festgelegt werden. Ein Kriterium kann eine Bedingungen zum Einschalten oder Ausschalten eines Energieerzeugers darstellen. Ein Kriterium kann auch maximale oder minimale Werte für Sollwerte von Energieerzeugern festlegen oder beeinflussen.

Die Steuereinrichtung kann zum Steuern einer multivalenten Energieversorgungsanlage eine Reihenfolge von Kriterien unterschiedlich hoher Priorität auswerten. Höchste Priorität haben dabei energieerzeugerspezifische Kriterien. Ein energieerzeugerspezifisches Kriterium kann sein, dass dem Energieerzeuger eine Mindestlaufzeit vorgegeben ist. Die Mindestlaufzeit kann vorgeben, dass der Energieerzeuger nicht ausgeschaltet werden darf. Dem Energieerzeuger kann auch eine Mindeststandzeit vorgegeben sein, die verhindert, dass der Energieerzeuger eingeschaltet werden darf.

Darüber hinaus kann ein energieerzeugerspezifisches Kriterium auch minimale oder maximale Sollwertgrenzen festlegen. Beispielsweise kann ein energieerzeugerspezifisches Kriterium einen maximalen Volumenstrom (oder Massenstrom oder elektrischen Strom) durch den Energieerzeuger und/oder eine maximale Leistung festlegen.

Da die energieerzeugerspezifischen Kriterien höchste Priorität haben sollen, darf die Steuereinrichtung diesen Kriterien nicht verändern können. Die Steuereinrichtung muss die Kriterien unverändert von den Energieerzeugern übernehmen.

An zweithöchster Stelle in der Reihenfolge der Kriterien können anlagenspezifische Kriterien festgelegt werden. Diese Kriterien sind unabhängig von den Energieformen Wärme, Kälte und elektrischer Strom und können beispielsweise einen minimalen Ladezustand eines Pufferspeichers festlegen. Hierdurch kann im Fall von Wärme beispielsweise ein Pufferfrostschutz gewährleistet werden. Zudem kann ein maximaler Ladezustand eines Pufferspeichers vorgegeben werden. Um in einem Heizungssystem einen Anlagenfrostschutz zu gewährleisten kann ferner eine minimale Anlagenvorlauftemperatur festgelegt werden. Außerdem kann auch eine maximale Anlagenvorlauftemperatur festgelegt werden. Entsprechend können auch minimale und maximale Anlagenwerte für elektrische Energie und/oder Kälte vorgegeben werden. Durch Vorgeben von anlagenspezifischen Kriterien kann auch ein Notbetrieb der Energieversorgungsanlage realisiert werden.

An dritter Stelle in der Prioritätenreihenfolge können energieformspezifische Kriterien festgelegt werden. Diese können je Energieform auch erzeugerspezifisch sein. Beispielsweise können in Abhängigkeit einer Außentemperatur bestimmte Energieerzeuger einer Energieform gesperrt werden, sofern dies gemäß energieerzeugerspezifischen Kriterien zulässig ist. Die energieformspezifischen Kriterien können beispielsweisejahreszeitabhängigsein. So kann erreicht werden, dass im Winter bei Kälte immer ausreichend Wärme bereitgestellt wird. Ferner kann erreicht werden, dass im Sommer bei hohen Außentemperaturen immer ausreichend Kälte und/oder elektrische Energie bereitgestellt wird. Außerdem kann festgelegt werden, dass jederzeit eine festgelegte Mindestmenge an elektrischer Energie bereitgestellt werden soll.

An vierter Stelle können Kriterien festgelegt werden, die pro Kaskade ausgewertet werden. Dabei können zunächst auch gruppenspezifische Kriterien festgelegt werden. Diese können vorgeben, ob eine ganze Gruppe eingeschaltet oder ausgeschaltet werden soll und/oder ein- oder ausgeschaltet werden darf. Innerhalb einer Gruppe können zudem stellenspezifische Kriterien festgelegt werden. Stellenspezifische Kriterien können beispielsweise anhand von Einschaltintegralen und/oder Ausschaltintegralen vorgegeben sein. Hierdurch werden Energieerzeuger beispielsweise bei Durchführen eines Laufzeitausgleichs innerhalb einer Gruppe daran gehindert, sofort nach Tauschen der Stellen auszuschalten, um ein Abfallen einer Regelgröße unter einen vorgegebenen Sollwert zu verhindern. Der Energieerzeuger, der durch den Laufzeitausgleich an einer entlang der Reihenfolge weiter hinten gelegene Stelle innerhalb seiner Gruppe rückt, kann noch so lange angeschaltet bleiben, bis der Istwert der entsprechenden Regelgröße nach einer bestimmten Zeit über einen Schwellwert steigt.

Im Sinne der Erfindung ist ein Energieerzeuger "eingeschaltet", wenn die von dem Energieerzeuger bereitgestellte Leistung einen vorgegebenen Leistungs-Schwellenwert überschreitet. Zum "Einschalten" eines Energieerzeugers wird also die von dem Energieerzeuger bereitgestellte Leistung so weit erhöht, bis die von dem Energieerzeuger bereitgestellte Leistung größer ist als der vorgegebene Leistungs-Schwellenwert.

Im Sinne der Erfindung ist ein Energieerzeuger "ausgeschaltet", wenn die von dem Energieerzeuger bereitgestellte Leistung einen vorgegebenen Leistungs-Schwellenwert unterschreitet. Zum "Ausschalten" eines Energieerzeugers wird also die von dem Energieerzeuger bereitgestellte Leistung so weit abgesenkt, bis die von dem Energieerzeuger bereitgestellte Leistung kleiner ist als der vorgegebene Leistungs-Schwellenwert.

Eine multivalente Energieversorgungsanlage ist eine Energieversorgungsanlage, die in Summe mehr als einen Energieträger als Energiequelle verwendet. Sie weist mindestens zwei Energieerzeuger auf, die jeweils eine nutzbare Energieform, wie zum Beispiel Wärme, Kälte, mechanische Energie und/oder elektrische Energie bereitstellen. Wärme kann beispielsweise für eine Warmwasserversorgung und/oder eine Heizungsanlage und/oder als Prozesswärme, beispielsweise für industrielle Anwendungen bereitgestellt werden. Zum Transportieren der Wärme wird üblicherweise ein fluides Trägermedium, also ein Gas oder eine Flüssigkeit verwendet, beispielweise Wasser oder Wasserdampf.

Um eine multivalente Energieversorgungsanlage optimal zu betreiben, muss die Steuerung der Energieversorgungsanlage in Abhängigkeit der spezifischen Eigenschaften der Energieerzeuger, die unter anderem von der Art des genutzten Energieträgers abhängen, erfolgen. Die vorliegende Erfindung zielt darauf ab, diese spezifischen Eigenschaften in synergetischer Weise miteinander zu kombinieren. In anderen Worten ausgedrückt erlaubt es das erfindungsgemäße Verfahren, die jeweiligen Vorteile verschiedener Energieträger, insbesondere in Hinblick auf deren Verfügbarkeit und/oder Energiegehalt optimal miteinander zu kombinieren. Dies gelingt durch eine koordinierte Steuerung der Energieerzeuger, so dass aus der Multivalenz der Energieversorgungsanlage, also der Nutzung unterschiedlicher Energieträger, ein Vorteil gegenüber monovalenten Energieversorgungsanlagen, die nur einen Energieträger nutzen, erzielt werden kann.

Insbesondere kann eine multivalente Energieversorgungsanlage eine Kombination aus regenerativen und fossilen Energieträgern verwenden, so dass ein besonders zuverlässiger Betrieb der Energieversorgungsanlage erreicht werden kann, da eine zeitlich schwankende Verfügbarkeit eines der genutzten Energieträger durch Verwenden mindestens eines weiteren Energieträgers ausgeglichen werden kann. Hierdurch erlaubt es das erfindungsgemäße Verfahren, dass die Steuerung der Energieversorgungsanlage auf Bedingungen reagieren kann, die sich zeitlich ändern.

Koordiniertes Steuern der Regeleinrichtungen bedeutet, dass die Steuereinrichtung beim Bestimmen der Sollwerte die Gesamtheit der Energieerzeuger in der Energieversorgungsanlage berücksichtigt. Dies kann beinhalten, dass bei gleichzeitigem Vorliegen einer Vielzahl von Energiebereitstellungsanforderungen für verschiedene Energieformen zu berücksichtigen ist, welcher Energieerzeuger welche Energieform(en) bereitstellen kann. Ferner kann es nötig sein, dass die Steuereinrichtung bestimmt, ob mehrere Energieerzeuger erforderlich sind, um die Energiebereitstellungsanforderung(en) zu erfüllen. Beim Auswählen der Energieerzeuger zum Erfüllen der Energiebereitstellungsanforderung(en) kann die Steuereinrichtung zudem beachten, wie viel Zeit die unterschiedlichen Energieerzeuger benötigen, um einen bestimmten Sollwert zu erreichen und/oder ob Restriktionen bezüglich der Verfügbarkeit eines durch die Energieerzeuger genutzten Energieträgers vorliegen.

Um ein koordiniertes Steuern der Regeleinrichtungen zu ermöglichen kann die Steuereinrichtung dafür ausgelegt sein, eine Vielzahl von spezifischen Eigenschaften der Energieerzeuger zu erfassen und gegebenenfalls miteinander zu vergleichen und/oder Abhängigkeiten zwischen den Energieerzeugern zu erkennen und zu berücksichtigen. Insbesondere können spezifische Eigenschaften hinsichtlich der Leistungsabgabe der Energieerzeuger bei der Steuerung der Energieversorgungsanlage berücksichtigt werden. Spezifische Eigenschaften hinsichtlich der Leistungsabgabe umfassen unter anderem eine maximal durch den Energieerzeuger bereitstellbare Leistung und die Zeit, die der Energieerzeuger benötigt, um einen ausgeschalteten in einen optimalen Betriebszustand überzugehen.

Die mindestens zwei Energieerzeuger der multivalenten Energieversorgungsanlage nutzen in Summe mindestens zwei verschiedene Energieträger. Als Energieträger können fossile und/oder regenerative Energieträger zum Einsatz kommen. Beispielsweise können zwei oder mehr aus der folgenden Liste verwendet werden: Kohle, Erdgas, Heizöl, Diesel, Benzin, Wasserstoff, Biogas, Holz (zum Beispiel in Form von Pellets und/oder Hackschnitzeln) oder andere Arten von Biomasse, geothermische Energie, Sonnenstrahlung, Wind, elektrische Energie (beispielsweise elektrischer Strom und/oder elektrische Spannung), Fernwärme, mechanische Energie (zum Beispiel Wasserkraft). Durch die Verwendung verschiedener Energieträger kann die Zuverlässigkeit der Energieversorgung verbessert werden, da eine Abhängigkeit von der Verfügbarkeit eines Energieträgers (wie zum Beispiel Sonne und/oder Wind) verringert werden kann.

Die multivalente Energieversorgungsanlage gemäß der Erfindung weist mindestens zwei Energieerzeuger auf, die jeweils mindestens einen der zuvor genannten Energieträger nutzen, um Energie in Form von Wärme, Kälte und/oder elektrischer Energie bereitzustellen, beispielsweise zwei oder mehr aus der folgenden Liste, die eine nicht abschließende Aufzählung ist: Ölheizkessel, Gasheizkessel, Brennwertkessel, Gasmotor, Gasturbine, Blockheizkraftwerk (BHKW), Holzkessel, (elektrische) Wärmepumpe, Photovoltaikanlage, Windturbine, thermischer Sonnenkollektor, Brennstoffzelle. Außerdem kann eine Wärme-Kraft-Kopplung, beispielsweise mit einem Stirlingmotor implementiert sein.

Die verschiedenen Energieerzeuger können sehr unterschiedliche spezifische Eigenschaften aufweisen und dementsprechend unterschiedliche oder sogar gegensätzliche Anforderungen bei deren Betrieb in einer multivalenten Energieversorgungsanlage stellen. Im Folgenden werden typische spezifische Eigenschaften einiger ausgewählter Energieerzeuger bespielhaft beschrieben.

Ein Ölheizkessel beziehungsweise Gasheizkessel nutzt die fossilen Energiequellen Heizöl beziehungsweise Erdgas und liefert Wärme, die üblicherweise auf ein fluides Trägermedium, meistens Wasser, übertragen wird. Er kann innerhalb kurzer Zeit hohe Leistungen liefern und auch schnell ausgeschaltet werden. Ein solcher Heizkessel ist gut regelbar und kann daher im modulierenden Betrieb verwendet werden. Ein Heizkessel erlaubt zudem häufiges Ein- und Ausschalten und kann daher auch zweistufig im Ein-/Ausschaltbetrieb eingesetzt werden. Ölheizkessel und Gasheizkessel sind somit in ihrem Betrieb besonders flexibel einsetzbar und werden häufig als sogenannte Spitzenlastkessel verwendet, die schnell auf Schwankungen von Energiebereitstellungsanforderungen reagieren sollen. Die Energiegesamtkosten, welche die Kosten des Energieträgers selbst sowie die Kosten der Wartung und die Investitionskosten für den Heizkessel berücksichtigen, bewegen sich im Vergleich mit anderen Energieerzeugern auf mittlerem Niveau.

Ein Blockheizkraftwerk (BHKW) nutzt üblicherweise fossile Energiequellen, könnte aber auch mit Biogas oder Wasserstoff, der aus regenerativen Quellen stammt, betrieben werden. Es liefert Wärme und elektrische Energie (elektrischer Strom und/oder elektrische Spannung), ist gut regelbar und kann schnell auf hohe Leistungen hochgefahren und auch schnell wieder runtergefahren werden. Im Unterschied zum Heizkessel soll das BHKW aber nicht häufig einbeziehungsweise ausgeschaltet werden. Um ein BHKW wirtschaftlich zu betreiben wird ist es in der Regel im Dauerbetrieb eingesetzt. Trotz hoher Investitionskosten kommt das BHKW insgesamt somit auf relativ niedrige Energiegesamtkosten.

Ein Holzkessel nutzt festen Brennstoff aus einer nachwachsenden Energiequelle (Holz, zum Beispiel in Form von Pellets oder Hackschnitzel) und liefert Wärme. Er ist nur mäßig regelbar und kann nur relativ langsam auf hohe Leistungen hochgefahren beziehungsweise wieder runtergefahren werden. Aufgrund der langen Schaltzeiten soll ein Holzkessel nicht häufig einbeziehungsweise ausgeschaltet werden. Beim Ausschalten muss schon aus Sicherheitsgründen üblicherweise abgewartet werden, bis der bereits in der Brennkammer befindliche Brennstoff vollständig verbrannt ist. Beim Einschalten muss hingegen zunächst ausreichend Brennstoff in die Brennkammer transportiert und entzündet werden. Er verursacht relativ niedrige Energiegesamtkosten. Daher wird er meist als Grundlastkessel verwendet, der möglichst kontinuierlich in Betrieb ist und eine Mindestenergieanforderung einer Energieversorgungsanlage erfüllen kann. Um auf Schwankungen in der angeforderten Energiemenge reagieren zu können, wird ein Holzkessel meist in Kombination mit einem Pufferspeicher verwendet, der die vom Holzkessel bereitgestellte Wärme zwischenspeichert, wenn die von den Verbrauchern geforderte Wärmemenge kleiner als die vom Holzkessel bereitgestellte Wärmemenge ist. Ist die von den Verbrauchern geforderte Wärmemenge größer als die vom Holzkessel bereitgestellte Wärmemenge, kann zunächst die gespeicherte Wärmemenge vom Pufferspeicher wieder abgegeben werden. Alternativ oder zusätzlich zum Pufferspeicher wird häufig ein Gasheizkessel zusammen mit Holzkesseln in einer Energieversorgungsanlage verwendet. Der Gasheizkessel wird dann eingeschaltet, wenn die geforderte Wärmemenge die vom Holzkessel und vom Pufferspeicher verfügbare Wärmemenge überschreitet. Der Gasheizkessel wird also als Spitzenlastkessel benutzt. Meist werden Holzkessel paarweise betrieben, damit stets mindestens einer der beiden Holzkessel betriebsbereit ist.

Eine elektrische Wärmepumpe verbraucht elektrische Energie und nutzt daher, je nachdem aus welcher Quelle die elektrische Energie gewonnen wurde, fossile und/oder regenerative Energiequellen. Sie kann Wärme und/oder Kälte liefern, hat jedoch einen eingeschränkten Temperaturbereich. Üblicherweise kann eine Wärmepumpe eine maximale Vorlauftemperatur von 60°C bereitstellen. Sie ist gut regelbar und kann schnell auf hohe Leistungen hochgefahren und auch schnell wieder runtergefahren werden. Allerdings darf sie nicht häufig ein- beziehungsweise ausgeschaltet werden. Sie verursacht relativ niedrige Energiegesamtkosten.

Eine weitere Komponente, die in vielen multivalenten Energieversorgungsanlagen verwendet wird ist ein Pufferspeicher. Der Pufferspeicher kann von Energieerzeugern bereitgestellte Energie zeitlich Zwischenspeichern. Je nach Energieform kann ein Pufferspeicher zum Beispiel ein Speicher für elektrische Energie. beispielsweise in Form von Akkus oder Kondensatoren, oder ein Wärmespeicher und/oder Kältespeicher, beispielsweise in Form eines isolierten Wassertanks, sein. Außerdem kann Energie auch in Form von mechanischer Energie gespeichert werden, zum Beispiel in einem Schwungrad. Ein Pufferspeicher erlaubt das zumindest teilweise Entkoppeln des Betriebs der Energieerzeuger von den Energieverbrauchern. Hierdurch kann der Wirkungsgrad einer multivalenten Energieversorgungsanlage verbessert werden.

Erfindungsgemäß kann die multivalente Energieversorgungsanlage dafür ausgelegt sein, Energie in Form von Wärme, Kälte und/oder elektrischer Energie bereitzustellen. Für jede Energieform kann mindestens eine Energiebereitstellungsanforderung vorliegen. Energiebereitstellungsanforderungen können für jede Energieform unabhängig voneinander durch die Steuerungseinrichtung erfasst werden und in entsprechende Sollwert-Forderungen an Energieerzeuger weiterverarbeitet werden. Eine Energiebereitstellungsanforderung kann beispielsweise von einem Verbraucher, einer Vielzahl von Verbrauchern oder einer externen oder internen Vorrichtung kommen, die Anforderungen einer Vielzahl von Verbrauchern koordiniert. Für jede Energieform können außerdem Kriterien für Energieerzeuger, die der entsprechenden Energieform zugeordnet sind, festgelegt werden. Energiebereitstellungsanforderungen für jede Energieform können unabhängig voneinander durch die Steuerungseinrichtung erfasst werden und in entsprechende Sollwertvorgaben an Energieerzeuger weiterverarbeitet werden.

Ferner kann für eine Energieform (zum Beispiel Wärme oder Kälte oder elektrische Energie) auch mehr als eine Energiebereitstellungsanforderung vorliegen. Hierzu kann eine Energieform, beispielsweise in Abhängigkeit der Anbindung der betreffenden Energieerzeuger und/oder der in den Verbraucherkreisläufen vorhandenen Verbraucherarten, in mehrere Unterenergieformen unterteilt werden. Hiermit kann zum Beispiel erreicht werden, dass die Energieform Wärme (oder Kälte oder elektrische Energie) an verschiedene Verbraucherkreisläufe mit unterschiedlichen Energiebereitstellungsanforderungen bereitgestellt werden kann. Die von der Energiebereitstellungsanforderung betroffenen Energieerzeuger können hierbei auch an voneinander getrennte Verbraucherkreisläufe angebunden sein. Alternativ kann mittels Ventilen, Drosselklappen und/oder Schaltern zwischen verschiedenen Verbraucherkreisläufen umgeschaltet werden.

Für die Energieform Wärme können beispielsweise dann verschiedene Energiebereitstellungsanforderungen vorliegen, wenn für die Warmwasserbereitstellung (Trinkwasser) und Heizung und/oder Prozesswärme (Brauchwasser beziehungsweise Dampf) unterschiedliche Vorlauftemperaturen angefordert werden.

Die Einteilung in die Energieformen Wärme, Kälte und elektrische Energie kann auch durch weitere Energieformen ergänzt werden. Ferner kann eine Energieform auch nutzungsabhängig Unterteil werden. Beispielsweise kann die Energieform Wärme in Warmwasser, Heizungswärme und/oder Warmluft aufgeteilt werden. Die Energieform Kälte kann beispielsweise in eine Gebäudekühlung (zum Beispiel Klimaanlage mit Frischluftzufuhr) und eine Gerätekühlung (zum Beispiel Kühlmittel zur Kühlung von Maschinen) aufgeteilt werden.

Da es in der multivalenten Energieversorgungsanlage Energieerzeuger geben kann, die gleichzeitig mehr als eine Energieform bereitstellen können, kann es nötig sein, festzulegen, unter welchen Voraussetzungen solche Energieerzeuger ein- beziehungsweise ausgeschaltet und/oder geregelt oder gesteuert werden sollen. Die Steuereinrichtung kann bei der Steuerung der Energieerzeuger bestimmte Energieformen priorisieren, so dass eine Energiebereitstellungsanforderung für eine erste Energieform gegenüber einer Energiebereitstellungsanforderung einer zweiten Energieform bevorzugt behandelt wird. Die Steuereinrichtung kann auch eine Prioritäts-Reihenfolge für die Energieformen festlegen oder erfassen. Die Prioritäts-Reihenfolge kann beispielsweise manuell von einem Benutzer festgelegt werden. Die Steuereinrichtung kann also Energiebereitstellungsanforderungen in Abhängigkeit der betreffenden Energieform erfassen und verarbeiten.

Beispielsweise liefert ein BHKW sowohl Wärme als auch elektrische Energie (elektrischer Strom und/oder elektrische Spannung). Folglich können für ein BHKW zwei unterschiedliche Forderungen aus den beiden Energieformen vorliegen. Da die vom BHKW bereitgestellte elektrische Energie aber bei Nichtvorliegen einer entsprechenden Forderung der durch die multivalente Energieversorgungsanlage versorgten Verbraucher jederzeit in ein öffentliches Stromnetz eingespeist werden kann, wird das BHKW üblicherweise im Dauerbetrieb eingesetzt.

Die Energieform Wärme umfasst alle Energieerzeuger, die Wärmeenergie bereitstellen können. Zudem berücksichtigt die Steuereinheit für die Energieform Wärme Bedingungen zum Einschalten und/oder Ausschalten, die einen Bezug zu einer Energiebereitstellungsanforderung von Wärme haben, zum Beispiel eine geforderte Anlagenvorlauftemperatur und/oder eine Puffertemperatur. In ähnlicher Weise werden Energieerzeuger den Energieformen elektrische Energie und Kälte zugeordnet.

Jeder Energieerzeuger in der Energieversorgungsanlage weist eine Regeleinrichtung zum Regeln von Regelgrößen des Energieerzeugers auf. Regelgrößen eines Energieerzeugers umfassen beispielsweise eine Kesseltemperatur des Energieerzeugers, einen Volumen- und/oder Massenstrom eines Trägermediums durch den Energieerzeuger, eine Temperatur des Trägermediums am Vorlauf und/oder am Rücklauf des Energieerzeugers, eine Leistungsaufnahme des Energieerzeugers und/oder eine Leistungsabgabe des Energieerzeugers. Bei einem Energieerzeuger, der elektrische Energie bereitstellt, können die Regelgrößen einen elektrischen Strom, eine elektrische Leistung und/oder eine elektrische Spannung betreffen.

Die Regeleinrichtungen werden von einer Steuereinrichtung koordiniert, die den Regeleinrichtungen übergeordnet ist. Die Steuereinrichtung ist dafür ausgelegt, eine Energiebereitstellungsanforderung für Energie in Form von Wärme und/oder Kälte und/oder elektrischer Energie zu erfassen. Eine Energiebereitstellungsanforderung kann beispielsweise eine Anforderung nach einer bestimmten Vorlauftemperatur oder eine bestimmte Temperatur in einem Pufferspeicher, insbesondere in einem bestimmten Bereich des Pufferspeichers, sein oder eine elektrische Leistung sein. Die Energiebereitstellungsanforderung kann beispielsweise von einem Verbraucher oder einem Verbund von Verbrauchern erzeugt werden und über eine geeignete Datenkommunikationsverbindung an die Steuereinrichtung ausgegeben werden.

Die Steuereinrichtung ist ferner dafür ausgelegt, für jeden Energieerzeuger Sollwerte zum Erfüllen der Energiebereitstellungsanforderung in Abhängigkeit des jeweils genutzten Energieträgers zu bestimmen, wobei die Sollwerte auch Anweisungen zum Einschalten oder Ausschalten eines Energieerzeugers umfassen.

Die Steuereinrichtung ist ferner dafür ausgelegt, die Sollwerte an die Regeleinrichtungen auszugeben. Zum Kommunizieren mit den Regeleinrichtungen nutzt die Steuereinrichtung eine geeignete Datenkommunikationsverbindung.

Die verschiedenen in der Energieversorgungsanlage genutzten Energieträger können beispielsweise aufgrund unterschiedlicher Kosten und/oder schwankender Verfügbarkeit Anforderungen an die Energieversorgungsanlage stellen. Um einen möglichst ununterbrochenen Betrieb der Energieversorgungsanlage sicherzustellen, ermittelt die Steuereinrichtung die Sollwerte für die Energieerzeuger, zum Beispiel in Abhängigkeit der aktuellen und/oder auch einer für die Zukunft berechneten, vorgegebenen oder geschätzten Verfügbarkeit der genutzten Energieträger.

Beispielsweise kann die Steuereinrichtung dafür ausgelegt sein, bevorzugte Energieerzeuger, die zum Beispiel besonders kostengünstige und/oder regenerative Energieträger nutzen, mit hoher beziehungsweise maximaler Leistung zu betreiben. Nicht bevorzugte Energieerzeuger, die zum Beispiel weniger kostengünstige und/oder fossile Energieträger nutzen und zur Abdeckung der Lastspitzen vorgesehen sind, sollen nicht zum Speichern von Wärme in einem Pufferspeicher eingesetzt werden. Bevorzugte Energieerzeuger dürfen den Pufferspeicher nutzen, um höhere Laufzeiten beziehungsweise weniger Schaltvorgänge zu realisieren.

Die erfindungsgemäße Steuereinrichtung einer multivalenten Energieversorgungsanlage kann den Regeleinrichtungen der Energieerzeuger Sollwerte vorgeben und/oder Schaltforderungen erteilen. Neben den Schaltforderungen, die festlegen, ob ein Energieerzeuger an- oder ausgeschaltet sein muss, kann die Steuereinrichtung aber auch Freigaben erteilen, die ein Einschalten oder Ausschalten eines Energieerzeugers erlauben, aber nicht erzwingen.

Alleine das gezielte Ein- und Ausschalten von Energieerzeugern durch die Steuereinrichtung wäre nicht ausreichend, um die Energiebereitstellungsanforderung zu erfüllen, denn durch das Schalten alleine wird nicht definiert, mit welchem Modulationsgrad bei welchem Temperaturniveau der freigegebene Energieerzeuger arbeiten soll. Hieraus folgt, dass Sollwertvorgaben durch die Steuereinrichtung erforderlich sind.

Die unterschiedlichen Regelgrößen einer Energieversorgungsanlage (zum Beispiel Anlagenvorlauftemperatur, Puffertemperatur), erfordern, dass individuelle Sollwertvorgaben an die einzelnen Energieerzeuger nötig sind. Daneben sollen auch Randbedingungen berücksichtigt werden. Diese Randbedingungen können zum Beispiel Regelstrategien, festgelegte bevorzugte Energieerzeuger und/oder eine Pufferdynamik umfassen.

Das gezielte Freigeben von Energieerzeugern ist nicht ausreichend, um beispielsweise eine Anlagenvorlauftemperatur und/oder eine Puffertemperatur auf ein gewünschtes Niveau mit einer erforderlichen Leistung zu regeln. Denn durch die Freigabe wird nicht definiert, welche Leistung bei welchem Temperaturniveau der jeweils freigegebene Energieerzeuger liefern soll. Daher sind zusätzliche Sollwertvorgaben erforderlich. In einer multivalenten Energieversorgungsanlage können unterschiedliche Energieerzeuger mit individuellen erzeugerspezifischen Restriktionen (zum Beispiel Minimal- und Maximalwerte der Leistung, des Volumenstroms oder der Laufzeiten) vertreten sein. Zusätzlich erlauben die umfangreichen Konfigurationsmöglichkeiten, dass Energieerzeuger auf jeweils unterschiedliche Regelgrößen (zum Beispiel Anlagenvorlauftemperatur, Pufferladezustand) arbeiten. Diese Umstände erfordern, dass jeder Energieerzeuger neben der Freigabe oder Schaltforderung individuelle Sollwerte erhält.

Vorzugsweise weist jede Regeleinrichtung eines jeden Energieerzeugers eine definierte Schnittstelle auf, um Sollwerte von der Steuereinrichtung zu empfangen. für Stellgrößen zur Verfügung, um dessen Regelziele zu erreichen. Die Stellgrößen können umfassen: eine (elektrische) Leistung, die der Energieerzeuger in die Energieversorgungsanlage einbringt, einen Volumen- oder Massenstrom (oder elektrischer Strom) vom Energieerzeuger in die Anlage, eine Energieerzeugervorlauftemperatur (eine elektrische Spannung).

Die Steuereinrichtung kann nicht direkt auf diese Regelgrößen wirken sondern gibt lediglich Sollwerte an eine Regeleinrichtung aus. Das Regeln der Regelgrößen auf die Sollwerte bleibt im Verantwortungsbereich der Regeleinrichtungen. Die Steuereinrichtung kann einer Regeleinrichtung anstatt eines festen Sollwerts auch einen Arbeitsbereich (jeweils durch eine obere und untere Restriktion beziehungsweise einen Schwellenwert) vorgeben, in dem die Regelgrößen von der Regeleinrichtung eingestellt werden können. Ein von der Steuereinrichtung festgelegter Arbeitsbereich kann dementsprechend durch einen oder mehrere Sollwerte definiert werden, welche Minimal- und/oder Maximalwerte für die Regelgrößen festlegen. Regelgrößen sind zum Beispiel:
Eine maximale thermische oder elektrische Leistung (beziehungsweise Wärmeleistung, Kälteleistung) des Energieerzeugers, die nicht überschritten werden darf. Die Forderung erfolgt zum Beispiel in Prozent in Relation zur physikalisch möglichen Maximalleistung des betroffenen Energieerzeugers.

Eine minimale thermische oder elektrische Leistung (beziehungsweise Wärmeleistung oder Kälteleistung) des Energieerzeugers, die nicht unterschritten werden darf. Die Forderung erfolgt zum Beispiel in Prozent in Relation zur physikalisch möglichen Maximalleistung des betroffenen Energieerzeugers.

Ein maximaler Volumenstrom (oder Massenstrom oder elektrischer Strom) des Energieerzeugers, der vom beziehungsweise durch den Energieerzeuger in die Energieversorgungsanlage fließt. Die Forderung erfolgt zum Beispiel in Prozent in Relation zum physikalisch möglichen maximalen Strom des betreffenden Energieerzeugers.

Ein minimaler Volumenstrom (oder Massenstrom oder elektrischer Strom) des Energieerzeugers, der vom beziehungsweise durch den Energieerzeuger in die Energieversorgungsanlage fließt. Die Forderung erfolgt zum Beispiel in Prozent in Relation zum physikalisch möglichen maximalen Strom des betreffenden Energieerzeugers.

Eine minimale und/oder maximale Energieerzeugervorlaufsolltemperatur oder elektrische Spannung. Die Forderung erfolgt in Grad Celsius beziehungsweise Volt. Die konkreten Werte, die die Steuereinrichtung an die Regeleinrichtungen der Energieerzeuger sendet, werden im Folgenden auch als Sollwerte bezeichnet.

Vorteilhafte Aus- und Weiterbildungen, welche einzeln oder in Kombination miteinander eingesetzt werden können, sind Gegenstand der abhängigen Ansprüche.

Die Steuereinrichtung kann dafür ausgelegt sein, eine Betriebsart aus einer vorbestimmten Menge von Betriebsarten zu erfassen, wodurch anlagenspezifische Kriterien, wie zum Beispiel Mindestwerte und/oder Maximalwerte, festgelegt werden können.

Die Betriebsarten können beispielsweise jahreszeitabhängig oder wetterabhängig sein. So kann die Steuereinrichtung der Energieversorgungsanlage zum Beispiel dafür ausgelegt sein, die Außentemperatur zu bestimmen und bei Frost ein Einfrieren von Wasserleitungen zu verhindern, indem eine entsprechend berechnete Mindesttemperatur als Sollwert (zum Beispiel für eine Vorlauftemperatur) vorgegeben wird. In ähnlicher Weise kann bei sehr hohen Außentemperaturen eine Betriebsart der Energieversorgungsanlage eingestellt werden, bei der beispielsweise nur solche Energieerzeuger, die elektrische Energie und/oder Kälte bereitstellen, betrieben werden sollen.

Ferner können Betriebsarten für Störungssituationen definiert werden, so dass bei Vorliegen einer Störung (zum Beispiel ein Wasserrohrbruch, ein elektrischer Kurzschluss oder sonstiges) ein Notbetrieb der Energieversorgungsanlage eingestellt wird. Bei einem Notbetrieb der Energieversorgungsanlage kann die Steuereinrichtung zum Beispiel dafür ausgelegt sein, allen Regeleinrichtungen eine Freigabe derart zu erteilen, dass alle Energieerzeuger im Wesentlich autonom, also unabhängig voneinander, betrieben werden können und gegebenenfalls nur noch von den Regeleinrichtungen gesteuert werden.

In der Steuereinrichtung können für eine Vielzahl vorab festgelegter Betriebsarten eine Vielzahl von Schwellenwerten, Arbeitsbereichen, Minimalwerten und/oder Maximalwerten für Anlagenbetriebsparameter, beispielsweise Puffertemperaturen und/oder Vorlauftemperaturen, hinterlegt sein. Erfasst die Steuereinrichtung, dass eine der festgelegten Betriebsarten eingestellt werden soll, so erfolgt das Bestimmen der Sollwerte für die Energieerzeuger in Abhängigkeit der hinterlegten Schwellenwerte, Arbeitsbereiche, Minimalwerte und/oder Maximalwerte.

Eine Reihenfolge des Einschaltens und/oder Ausschaltens von Energieerzeugern kann in mehrere Kaskaden aufgeteilt sein, wobei jeder Kaskade eine oder mehrere Gruppe(n) von Energieerzeugern umfassen kann. Jede Kaskade kann gruppenspezifische Kriterien umfassen. In jeder Gruppe können stellenspezifische Kriterien festgelegt sein, die in Abhängigkeit der Stelle innerhalb der Gruppe bestimmte Schaltvorgaben, Freigaben und/oder Sollwertgrenzen festlegen können.

Eine Kaskade ist eine den Gruppen übergeordnete Ebene der Einteilung der Energieerzeuger und legt jeweils eine sequenzielle Reihenfolge der in ihr enthaltenen Energieerzeuger beziehungsweise Gruppen von Energieerzeugern fest. Kaskaden sind unabhängig voneinander steuerbar. Somit können mehrere parallel ausführbare sequenzielle Reihenfolgen von Energieerzeugern definiert werden, wobei jeweils unterschiedliche Kriterien für das Einschalten und/oder Ausschalten festgelegt werden können.

In jeder Gruppe wird eine Sequenz von Energieerzeugern festgelegt, wobei die Sequenz in Abhängigkeit von Regelgrößen der Energieerzeuger variabel sein kann. So kann zum Beispiel ein Laufzeitausgleich zwischen mehreren Energieerzeugern einer Gruppe realisiert werden. Die Reihenfolge des Einschaltens und/oder Ausschaltens von Energieerzeugern innerhalb einer Kaskade kann in Abhängigkeit einer Reihenfolge der Gruppen und der Sequenzen innerhalb der Gruppen bestimmt werden.

Innerhalb jeder Kaskade kann autark entschieden werden, ob und nach welchen Kriterien Energieerzeuger entlang der Reihenfolge ein- und/oder ausgeschaltet werden sollen. Dazu kann für jede Kaskade eine Vielzahl von Kriterien festgelegt sein, die zum Beispiel Schwellenwerte in Abhängigkeit von Energiebereitstellungsanforderungen definieren.

Die Kaskaden können von der Steuereinrichtung parallel ausgeführt werden. Hierdurch kann die Regelgüte im Vergleich zu Verfahren, bei denen nur eine lineare Sequenz von Energieerzeugern festgelegt wird, deutlich verbessert werden. Außerdem kann durch das parallele Ausführen von Kaskaden verhindert werden, dass die Schaltreihenfolge an einem Energieerzeuger hängen bleibt, bei dem der Schaltvorgang durch ein Kriterium mit höherer Priorität verhindert wird.

Die Steuereinrichtung kann vorzugsweise von jeder der Regeleinrichtungen Restriktionen bezüglich der Regelgrößen des jeweiligen Energieerzeugers erfassen, wobei die Restriktionen Minimal- und/oder Maximalwerte einer durch den Energieerzeuger bereitgestellten Leistung betreffen und/oder angeben, ob der betreffende Energieerzeuger eingeschaltet oder ausgeschaltet sein muss.

Diese Restriktionen können erzeugerspezifische Restriktionen sein. Als Restriktion können auch ein Minimalwert und/oder ein Maximalwert vorgegeben werden, die jeweils auch gleich groß sein können. Hierdurch kann für den Energieerzeuger ein Arbeitspunkt festgelegt werden, an dem der Energieerzeuger betrieben werden soll. Ein solcher Arbeitspunkt kann beispielsweise einen besonders hohen Wirkungsgrad des Energieerzeugers sicherstellen. Durch das Erfassen der Restriktionen kann erreicht werden, dass die Steuereinrichtung in koordinierter Weise beim Bestimmen der Sollwerte zum Erfüllen der Energiebereitstellungsanforderungen auf Vorgaben durch die Energieerzeuger Rücksicht nimmt. Insbesondere kann vermieden werden, dass die Steuereinrichtung einen Sollwert für einen Energieerzeuger bestimmt, der aufgrund eigener Restriktionen diesen Sollwert nicht erfüllen kann.

Außerdem kann die Steuereinrichtung dafür ausgelegt sein, von jeder der Regeleinrichtungen spezifische Eigenschaften hinsichtlich einer Leistungsabgabe des jeweiligen Energieerzeugers zu erfassen, die angeben wie ein Energieerzeuger auf eine Regelgrößenänderung reagiert. Solche spezifische Eigenschaften können eine Kennlinie eines Energieerzeugers darstellen, die beispielsweise angibt, welche Leistung der Energieerzeuger ausgibt, wenn eine bestimmte Stellgröße eingestellt wird. Die spezifischen Eigenschaften können insbesondere dynamische Eigenschaften des Energieerzeugers betreffen. Zum Beispiel können sie beschreiben, wie viel Zeit ein Energieerzeuger benötigt, um auf Volllast (maximale Leistungsabgabe) hochgefahren zu werden, beziehungsweise wie lange es dauert, um den Energieerzeuger auszuschalten (keine Leistungsabgabe).

Eine spezifische Eigenschaft eines Energieerzeugers kann außerdem von einer hydraulischen Anbindung des Energieerzeugers in der Energieversorgungsanlage abhängen. So kann erreicht werden, dass Energieerzeuger gemäß ihrer physischen Anordnung in der Energieversorgungsanlage angesteuert werden. Hierdurch kann die beispielsweise das Erfüllen einer Anforderung nach einer bestimmten Vorlauftemperatur vereinfacht werden.

Eine spezifische Eigenschaft eines Energieerzeugers gemäß der Erfindung kann ferner die von ihm bereitgestellte(n) Energieform(en) sein. Außerdem kann die spezifische Eigenschaft der von dem Energieerzeuger verwendete Energieträger sein und/oder von der Art des verwendeten Energieträgers abhängen.

In einem bevorzugten Verfahren kann die Steuereinrichtung erfassen, ob eine Energiebereitstellungsanforderung zum Bereitstellen von Wärme und elektrischer Energie vorliegt. Wenn dies der Fall ist, ermittelt die Steuereinrichtung ob einer der Energieerzeuger Wärme und elektrische Energie bereitstellen kann. Wenn dies der Fall ist bestimmt die Steuereinrichtung Sollwerte für den Energieerzeuger zum Bereitstellen von Wärme und elektrischer Energie in Abhängigkeit der Energiebereitstellungsanforderung. Alternativ kann die Steuereinrichtung mindestens zwei Energieerzeuger auswählen, so dass mindestens einer der Energieerzeuger Wärme und mindestens ein anderer Energieerzeuger elektrische Energie bereitstellt.

Die erzeugerspezifischen Kriterien können von der Art des von dem Energieerzeuger verwendeten Energieträgers abhängen. So können zum Beispiel dynamische Restriktionen eines Energieerzeugers vom verwendeten Brennstoff abhängen. Wie oben erläutert benötigt etwa ein Holzkessel wesentlich mehr Zeit zum Hochfahren als ein Gaskessel. Weitere erzeugerspezifischen Kriterien können mit der Verfügbarkeit oder den Kosten des Energieträgers zusammenhängen.

So kann zum Beispiel ein Energieerzeuger, der die Sonne als Energiequelle nutzt, nachts keine Energie bereitstellen. Eine Windturbine kann bei Windstille keine Energie bereitstellen. Bei einer Wärmepumpe kann ein Mindestintervall vorgegeben sein, in dem die Wärmepumpe nicht ausgeschaltet werden darf, beziehungsweise ein Zeitraum, in dem die Wärmepumpe nach einem Ausschalten nicht wieder eingeschaltet werden darf. All diese und weitere spezifische Eigenschaften können Auswirkungen auf den Betrieb einer multivalenten Energieversorgungsanlage haben.

Vorzugsweise kann das Verfahren einen Schritt umfassen, bei dem bestimmt wird, ob eine Energiebereitstellungsanforderung für mehr als eine der Energieformen Wärme, Kälte oder elektrische Energie besteht. Dann kann eine Einteilung der Kaskaden in Abhängigkeit der durch die Energieerzeuger bereitgestellten Energieform festgelegt werden. Das Regeln der Energieerzeuger erfolgt dann durch die Steuereinrichtung in Abhängigkeit der festgelegten Einteilung der Kaskaden in Energieformen.

Das Verfahren kann zudem einen Schritt umfassen, in dem bestimmt wird, ob für einen Energieerzeuger mehr als eine Energiebereitstellungsanforderung vorliegt. Falls für einen Energieerzeuger mehr als eine Energiebereitstellungsanforderung vorliegt, kann die Steuereinrichtung bestimmen, welche der spezifischen Energiebereitstellungsanforderung prioritär behandelt werden soll. Die Sollwerte werden dann für den einen Energieerzeuger in Abhängigkeit der prioritären Energiebereitstellungsanforderung bestimmt.

Vorzugsweise umfasst die Steuereinrichtung eine Einrichtung zum Erfassen von Restriktionen. Die Restriktionen können Minimal- und/oder Maximalwerte einer durch einen Energieerzeuger bereitgestellten Leistung betreffen und/oder angeben, ob der betreffende Energieerzeuger eingeschaltet oder ausgeschaltet sein muss.

Die Steuereinrichtung kann ferner eine Koordiniereinheit umfassen, die dazu ausgelegt ist, Schaltforderungen und/oder Sollwertvorgaben aus den drei Energieformen gemäß einer Priorisierung der Energieformen an die Sollwertausgabeeinrichtung auszugeben.

Wie schon weiter oben beschrieben kann eine Energiebereitstellungsanforderung für eine bestimmte Energieform prioritär behandelt werden. Der Vorteil dieses Verfahrens kann darin bestehen, dass Konflikte zwischen kollidierenden Energiebereitstellungsanforderung vermieden werden können. Somit kann ein zuverlässiger Betrieb der Energieversorgungsanlage gesichert werden.

### Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
- **Figur 1**: eine Darstellung einer Steuerungslogik einer multivalenten Energieversorgungsanlage gemäß einem ersten Ausführungsbeispiel.
- **Figur 2**: eine Darstellung einer Steuerungslogik einer multivalenten Energieversorgungsanlage mit fünf Energieerzeugern für drei Energieformen gemäß einem zweiten Ausführungsbeispiel.

- **Figur 3**: ein Hydraulikschema einer multivalenten Energieversorgungsanlage gemäß einem dritten Ausführungsbeispiel mit zwei BHKWs und zwei Gaskesseln.
- **Figur 4**: eine Einteilung der Energieerzeuger des dritten Ausführungsbeispiels in Energieformen, Kaskaden und Gruppen.
- **Figur 5**: ein Hydraulikschema einer multivalenten Energieversorgungsanlage gemäß einem vierten Ausführungsbeispiel mit zwei Holzkesseln und einem Gaskessel.
- **Figur 6**: eine Einteilung der Energieerzeuger des vierten Ausführungsbeispiels in Kaskaden und Gruppen.
- **Figur 7**: ein Hydraulikschema einer multivalenten Energieversorgungsanlage gemäß einem fünften Ausführungsbeispiel mit einer Wärmepumpe und einem Gaskessel.
- **Figur 8**: eine Einteilung der Energieerzeuger des fünften Ausführungsbeispiels in Kaskaden und Gruppen.
- **Figur 9**: ein Hydraulikschema einer multivalenten Energieversorgungsanlage gemäß einem sechsten Ausführungsbeispiel mit zwei Ölkesseln und zwei Gaskesseln.
- **Figur 10**: eine Einteilung der Energieerzeuger des sechsten Ausführungsbeispiels in Kaskaden und Gruppen.
- **Figur 11**: ein Hydraulikschema einer multivalenten Energieversorgungsanlage gemäß einem siebten Ausführungsbeispiel mit zwei Gaskesseln, zwei BHKWs und zwei Holzkesseln.
- **Figur 12**: eine Einteilung der Energieerzeuger des siebten Ausführungsbeispiels in Kaskaden und Gruppen.
- **Figur 13**: ein Flussdiagramm, das veranschaulicht, wie Prioritäten in einer multivalenten Energieversorgungsanlage gemäß einem achten Ausführungsbeispiel ausgewertet werden.

### Ausführliche Beschreibung von Ausführungsbeispielen

Bei der nachfolgenden Beschreibung einer bevorzugten Ausführungsform der vorliegenden Erfindung bezeichnen gleiche Bezugszeichen gleiche oder vergleichbare Komponenten.

### Erstes Ausführungsbeispiel

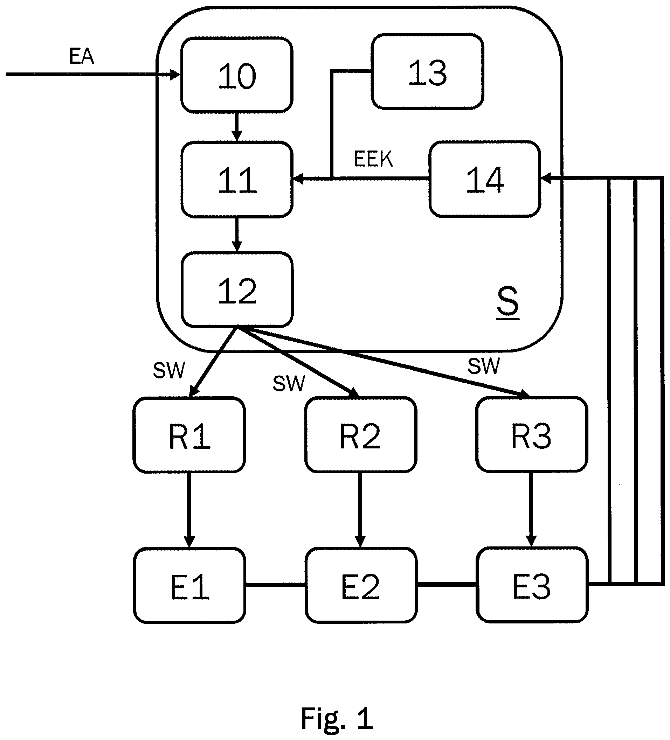

Figur 1 zeigt einen schematischen Aufbau einer Steuereinrichtung S zum Steuern einer multivalenten Energieversorgungsanlage gemäß einem ersten Ausführungsbeispiel mit drei Energieerzeugern E1-E3. Die drei Energieerzeuger E1-E3 werden durch jeweils eine Regeleinrichtung R1-R3 geregelt.

Jeder Energieerzeuger E1-E3 kann drei mögliche Schaltzustände einnehmen. Entweder der Energieerzeuger E1-E3 muss eingeschaltet sein, der Energieerzeuger E1-E3 muss ausgeschaltet sein, oder der Energieerzeuger E1-E3 darf eingeschaltet oder ausgeschaltet sein.

Die Steuereinrichtung S umfasst auch eine Anforderungserfassungseinrichtung 10, die dafür ausgelegt ist, mindestens eine Energiebereitstellungsanforderung EA für jeweils mindestens eine Energieform Wärme und/oder Kälte und/oder elektrische Energie zu erfassen. Die Energiebereitstellungsanforderung EA kann entweder von außen kommen, zum Beispiel von einer Vielzahl von Verbrauchern (nicht dargestellt), und über eine geeignete Datenleitung an die Anforderungserfassungseinrichtung 10 der Steuereinrichtung S übertragen werden, oder auch intern von einer Anforderungserzeugungseinrichtung (nicht dargestellt) in der Steuereinrichtung S selbst erzeugt werden.

Die Steuereinrichtung S weist ferner eine Sollwertbestimmungseinrichtung 11 auf, die dafür ausgelegt ist, Sollwerte SW für eine Vielzahl von Energieerzeugern E1-E3 der multivalenten Energieversorgungsanlage zu bestimmen. Die Sollwertbestimmungseinrichtung 11 überträgt die erzeugten Sollwerte SW an eine Sollwertausgabeeinrichtung 12, welche die Sollwerte SW über geeignete Datenleitungen an Regeleinrichtungen R1-R3 der Energieerzeugern E1-E3 ausgibt.

Außerdem weist die Steuereinrichtung S eine Kriterienbestimmungseinrichtung 14 auf, die dafür ausgelegt ist, für jeden der Energieerzeuger E1-E3 zu bestimmen, ob ein energieerzeugerspezifisches Kriterium EEK vorliegt, welches für den Energieerzeuger E1-E3 genau einen von drei möglichen Schaltzustände festlegt. Die Kriterienbestimmungseinrichtung 14 gibt die bestimmten energieerzeugerspezifischen Kriterien EEK an die Sollwertbestimmungseinrichtung 11 aus, so dass die Sollwerte SW in Abhängigkeit der energieerzeugerspezifischen Kriterien EEK bestimmt werden können.

Die Steuereinrichtung S weist ferner eine (optionale) Einrichtung 13 zum Erfassen von Restriktionen auf. Die erfassten Restriktionen können zum Beispiel Minimal- und/oder Maximalwerte einer durch einen der Energieerzeuger E1-E3 bereitgestellten Leistung betreffen. Die Restriktionen können direkt von den Energieerzeugern E1-E3 beziehungsweise deren Regeleinrichtungen R1-R3 erfasst werden. Hierzu kann eine geeignete Kommunikationsverbindung zwischen den Energieerzeugern E1-E3 beziehungsweise deren Regeleinrichtungen R1-R3 und der Einrichtung 13 zum Erfassen von Restriktionen dienen. Alternativ können die Restriktionen von der Steuereinrichtung S erzeugt werden, durch einen Benutzer vorgegeben werden oder von einer externen Einrichtung an die Steuereinrichtung S ausgegeben werden.

Die Steuereinrichtung S kann beispielsweise als Mikroprozessor mit einer CPU ausgebildet sein. Die Anforderungserfassungseinrichtung 10, die Sollwertbestimmungseinrichtung 11, die Sollwertausgabeeinrichtung 12, die Einrichtung 13 zum Erfassen von Restriktionen und die Kriterienbestimmungseinrichtung 14 können jeweils als getrennte elektronische Komponenten der Steuereinrichtung S ausgebildet sein. Alternativ kann die CPU der Steuereinrichtung S dafür ausgelegt sein, eine, mehrere oder alle Aufgaben der Sollwertbestimmungseinrichtung 11, der Sollwertausgabeeinrichtung 12, der Einrichtung 13 zum Erfassen von Restriktionen und/oder der Kriterienbestimmungseinrichtung 14 zu übernehmen.

### Zweites Ausführungsbeispiel

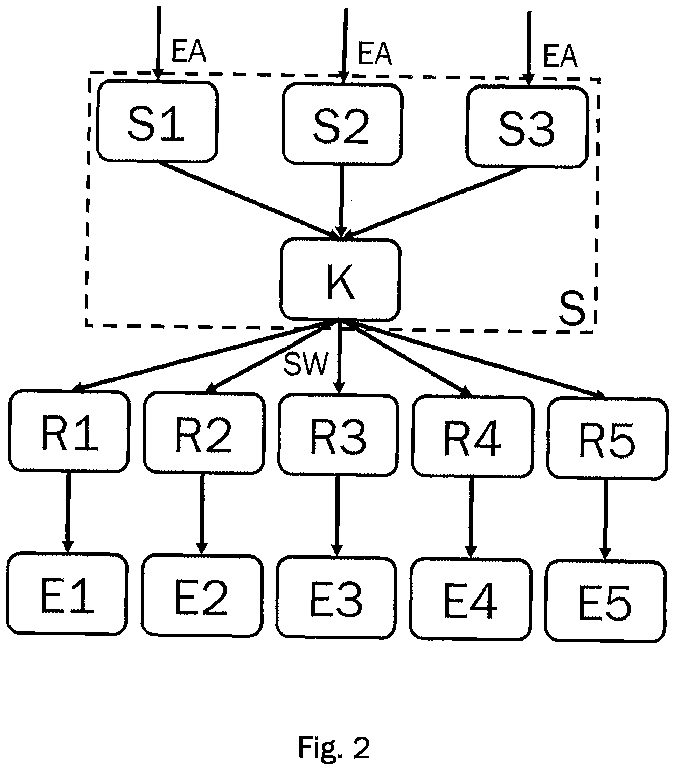

Figur 2 zeigt ein zweites Ausführungsbeispiel einer multivalenten Energieversorgungsanlage mit fünf Energieerzeugern E1-E5. Die SteuereinrichtungS umfasst drei Steuereinheiten S1-S3 und eine Koordiniereinheit K. Die Steuereinheiten S1-S3 erfassen jeweils eine Energiebereitstellungsanforderung EA für je eine Energieform.

Zum Beispiel kann die erste Steuereinheit S1 eine Energiebereitstellungsanforderung EA in Form einer Wärmeanforderung, die zweite Steuereinheit S2 eine Energiebereitstellungsanforderung EA in Form einer Kälteanforderung und die dritte Steuereinheit S3 eine Energiebereitstellungsanforderung EA in Form einer Anforderung nach elektrische Energie erfassen. Da es Energieerzeuger in der Energieversorgungsanlage geben kann, die mehr als eine Energieform bereitstellen, wie zum Beispiel ein Blockheizkraftwerk, das elektrische Energie und Wärme bereitstellt, kann es sein, dass die Steuereinrichtung S Energiebereitstellungsanforderungen EA für verschiedene Energieformen erfasst, die denselben Energieerzeuger betreffen.

Die Koordiniereinheit K ist dafür ausgelegt, die durch die drei Steuereinheiten S1-S3 erfassten Energiebereitstellungsanforderungen EA und die daraus bestimmten Sollwerte auf Konflikte zu überprüfen und den Einsatz der Energieerzeuger entsprechend zu koordinieren. Hierzu können den einzelnen Energieformen unterschiedliche Prioritäten eingeräumt werden. Für ein BHKW wäre es zum Beispiel sinnvoll, eine Forderung nach elektrischer Energie prioritär zu behandeln, damit es nicht ausgeschaltet wird wenn keine Wärmeanforderung vorliegt.

Die Koordiniereinheit K ist dafür ausgelegt, das Zusammenspiel zwischen den verschiedenen Energieformen F1-F3 zu regeln. Energieerzeuger, die mehrere Energieformen bereitstellen und eine Forderung zum Einschalten bezüglich einer ersten Energieform F1 erhalten, sollen aufgrund von Energiebereitstellungsanforderungen EA für eine zweite Energieform F2 oder dritte Energieform F3 nicht ausgeschaltet werden können. Hierfür ordnet die Koordiniereinheit K den Energieformen Prioritäten zu. Jene Energieform, die einem Energieerzeuger als erstes eine Forderung zum Einschalten erteilt, erhält die höchste Priorität. Die Energieform behält solange die höchste Priorität, wie ihre Forderung besteht. Falls in einem Berechnungsschritt mehrere Energieformen einem Energieerzeuger eine Forderung zum Einschalten erteilen, wird die Priorität gemäß einer vorbestimmten Prioritätenfolge ermittelt.

Die Koordiniereinheit K kann zudem Berücksichtigen, dass möglichst wenige Schaltvorgänge wie möglich erfolgen sollen. Insbesondere berücksichtigt die Koordiniereinheit K hierbei auch erzeugerspezifische Vorgaben, da es Energieerzeuger gibt, die nach einem Einschalten oder Ausschalten für eine bestimmte Zeit nicht geschaltet werden dürfen. Andere Energieerzeuger können praktisch unbegrenzt ein- und ausgeschaltet werden.

Erhält die Koordiniereinheit K eine Forderung zum Einschalten beziehungsweise Ausschalten eines Energieerzeugers, kann die Koordiniereinheit K eine Schätzung des Energiebedarfs der unterschiedlichen Energieformen durchführen. Außerdem kann die Koordiniereinheit eine Schätzung eines zukünftigen Energiebedarfs durchführen. Entsprechend kann die Koordiniereinheit K ermitteln, ob ein Einschalten oder Ausschalten von Energieerzeugern vermieden werden kann.

### Drittes Ausführungsbeispiel

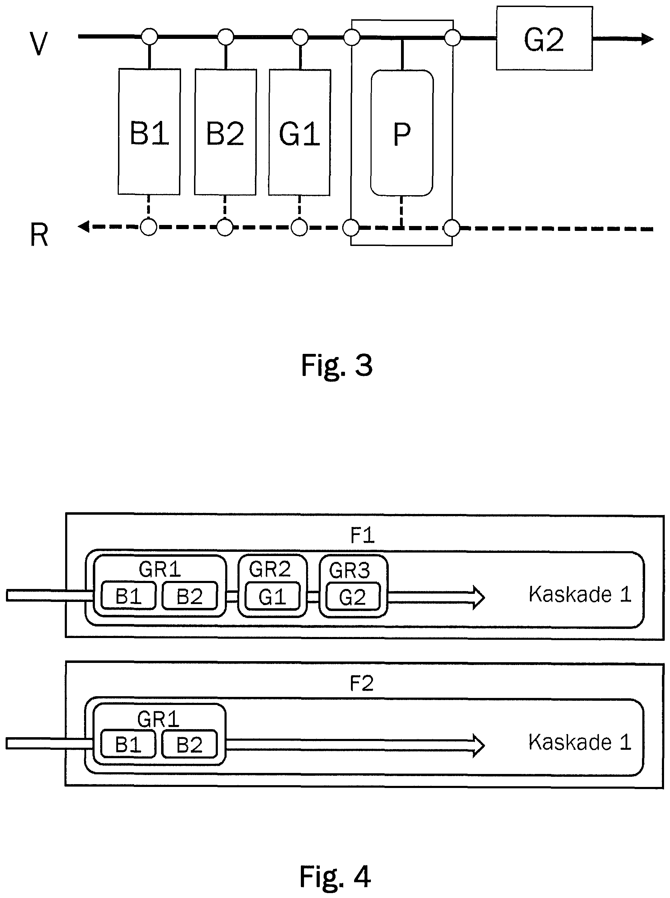

Figur 3 zeigt eine schematische Darstellung eines dritten Ausführungsbeispiels einer multivalenten Energieversorgungsanlage zum Bereitstellen von Wärme und elektrischer Energie. In Figur 3 ist ein Hydraulikschema (eine schematische Darstellung der Infrastruktur) der Energieversorgungsanlage dargestellt, bei der Wärme an ein fluides Trägermedium, zum Beispiel Wasser, abgegeben wird. Das Trägermedium transportiert die Wärme über einen Vorlauf V zu einem Verbraucherkreislauf (nicht dargestellt). Der Vorlauf ist als durchgezogener Pfeil dargestellt, der die Fließrichtung des Trägermediums illustriert. Im Verbraucherkreislauf kann eine Vielzahl von Verbrauchern, zum Beispiel eine Vielzahl von Heizkörpern, angeordnet sein.

Über einen Rücklauf R fließt das Trägermedium vom Verbraucherkreislauf zurück zur Energieversorgungsanlage. Der Rücklauf ist als gestrichelter Pfeil dargestellt, der die Fließrichtung des Trägermediums illustriert. Das Trägermedium kann beispielsweise mittels Umwälzpumpen zum Fließen gebracht werden, die im Erzeugerkreislauf, beispielsweise in den Energieerzeugern B1, B2, G1, G2, und/oder im Verbraucherkreislauf angeordnet sein können. Zudem können Ventile und/oder Drosselklappen und/oder Sensoren zum Messen des Stroms und/oder der Temperatur in den Energieerzeugern B1, B2, G1, G2 und/oder im Vorlauf V und/oder im Rücklauf R angeordnet sein, um einen Fluss durch die Energieerzeuger B1, B2, G1, G2 zu steuern, beziehungsweise zu regeln.

Die Energieversorgungsanlage weist zwei Blockheizkraftwerke (BHKW) B1, B2 und zwei Gaskessel G1, G2 auf, wobei die beiden BHKWs B1, B2 jeweils zwischen dem Vorlauf V und dem Rücklauf R parallel zueinander angeordnet sind. Über den Rücklauf R fließt das von Verbraucherseite kommende Trägermedium zu den Energieerzeugern, die dem Trägermedium Wärme zuführen. Über den Vorlauf V fließt das Trägermedium zum Verbraucherkreislauf (nicht dargestellt).

Ein erster Gaskessel G1 ist ebenfalls parallel zu den BHKWs B1, B2 stromabwärts am Vorlauf V angeordnet. Weiter stromabwärts am Vorlauf V befindet sich zudem ein Pufferspeicher P parallel zum ersten Gaskessel G1 und den BHKWs B1, B2. Stromabwärts vom Pufferspeicher P ist ein zweiter Gaskessel G2 in Reihe im Vorlauf V angeordnet, so dass der zweite Gaskessel G2 die Vorlauftemperatur direkt anheben kann. Aufgrund der Anordnung des zweiten Gaskessels G2 im Vorlauf nach dem Pufferspeicher kann er die Temperatur des im Pufferspeicher gespeicherten Wassers nicht beeinflussen.

Die BHKWs B1, B2 und die Gaskessel G1, G2 weisen jeweils eine Regeleinrichtung R1, R2, R3, R4 zum Regeln von Regelgrößen der Energieerzeuger auf. Eine Steuereinrichtung S ist mit den Regeleinrichtungen R1, R2, R3, R4 verbunden und kann periodisch die eingestellten Regelgrößen abfragen und Sollwerte SW an die Regeleinrichtungen R1, R2, R3, R4 ausgeben. Die Steuerungslogik kann somit wie in Figur 1 dargestellt, aber mit vier Energieerzeugern B1, B2, G1, G2, ausgeführt sein.

Die Steuereinrichtung S der Energieversorgungsanlage des Ausführungsbeispiels kann gemäß Vorgaben eines festgelegten Betriebsmodus gesteuert werden. Der erste Gaskessel G1 soll dabei erst dann eingesetzt werden, wenn beide BHKWs B1, B2 bereits in Betrieb sind und die von ihnen im Vorlauf V bereitgestellte Wärme nicht ausreicht, um eine Energiebereitstellungsanforderung EA, zum Beispiel in Form einer geforderten Temperatur im Pufferspeicher P oder einer Anlagenvorlauftemperatur an der Übergabe (rechts in Figur 3) zum Verbraucherkreislauf, zu erfüllen. Der zweite Gaskessel G2 soll gemäß dem Betriebsmodus erst dann eingesetzt werden, wenn beide BHKWs B1, B2 und der erste Gaskessel G1 bereits in Betrieb sind und die bereitgestellte Wärme nicht ausreicht um die Energiebereitstellungsanforderung zu erfüllen.

Anhand von Figur 4 wird nun erklärt, wie eine Reihenfolge des Einschaltens beziehungsweise Ausschaltens in der multivalenten Energieversorgungsanlage bestimmt wird. Da die multivalente Energieversorgungsanlage sowohl Wärme als auch elektrische Energie bereitstellen kann werden zwei Energieformen F1 (für Wärme) und F2 (für elektrische Energie) bereitgestellt.

Zwischen den BHKWs B1, B2 soll ein Laufzeitausgleich stattfinden. Dazu werden die beiden BHKWs B1, B2 in einer Gruppe GR1 zugeordnet. Innerhalb der Gruppe können die BHKWs B1, B2 ihre Stellen tauschen. Ein Kriterium dafür an welcher Stelle ein BHKW in der Gruppe stehen soll kann der Laufzeitunterschied zwischen den BHKWs B1, B2 sein. Der Laufzeitunterschied ist aber ein energieerzeugerspezifisches Kriterium. Ein energieerzeugerspezifisches Kriterium wandert beim Tauschen der Stellen mit und bleibt somit beim Energieerzeuger. Um ein ständiges Tauschen der Stellen der beiden BHKWs B1, B2 innerhalb der Gruppe GR1 zu verhindern, kann zudem ein Mindestlaufzeitunterschied festgelegt werden, ab dem ein Laufzeitausgleich stattfinden darf. Die Steuereinrichtung erfasst die Laufzeiten der BHKWs und legt in Abhängigkeit der erfassten Laufzeiten die Reihenfolge der BHKWs fest.

Stellenspezifische Kriterien bleiben jeweils ihrer Stelle erhalten und wandern beim Tauschen von Energieerzeugern nicht mit. Bei einem stellenspezifischen Kriterium kann es sich zum Beispiel um Vorgaben handeln, wie ein Energieerzeuger zeitlich ein- beziehungsweise ausgeschaltet werden soll, wie zum Beispiel ein Einschaltintegral und/oder ein Ausschaltintegral. Ein weiteres Beispiel für ein Stellenkriterium ist das Ausschalten eines Energieerzeugers in Abhängigkeit einer Puffertemperatur.

Durch die Verwendung von Stellenkriterien zum Einschalten beziehungsweise Ausschalten von Energieerzeugern kann ein Verhalten der Energieversorgungsanlage unabhängig von den jeweils sich an der Stelle befindlichen Energieerzeuger festgelegt werden. So können beispielsweise Schwellenwerte festgelegt werden, bei deren über- oder unterschreiten jeweils ein bestimmtes vorab festgelegtes Schaltverhalten ausgeführt wird. So kann beispielsweise für jede Stelle in der Reihenfolge der Energieerzeuger festgelegt werden, ob bei über- oder unterschreiten eines Schwellenwertes der Energieerzeuger an der jeweiligen Stelle ausgeschaltet oder eingeschaltet werden soll. Es ist somit möglich, das Verhalten einer Energieversorgungsanlage mit einer unter Umständen noch unbekannten Konfiguration unabhängig von den später tatsächlich verwendeten Energieerzeugern, vorab in bestimmten Grenzen festzulegen.

Die Reihenfolge, in der der erste Gaskessel G1 und der zweite Gaskessel G2 eingeschaltet werden soll fest sein. Es soll kein Laufzeitausgleich zwischen den Gaskesseln G1, G2 stattfinden. Der Grund hierfür kann beispielsweise sein, dass der erste Gaskessel G1 einen besseren Nutzungsgrad (zum Beispiel ein Brennwertkessel) als der zweite Gaskessel G2 (zum Beispiel ein Niedertemperaturkessel) hat. Um dies zu erreichen, werden die beiden Gaskessel G1, G2 zwei separaten Gruppen GR2, GR3 zugeordnet. Der Nutzungsgrad der Gaskessel ist ein Beispiel für eine spezifische Eigenschaft der Energieerzeuger.

Die drei Gruppen GR1, GR2, GR3 der ersten Energieform F1 können einer gemeinsamen Kaskade 1 zugeteilt werden. Die Reihenfolge der Gruppen GR1, GR2, GR3 kann fest oder variabel sein. Damit die BHKWs B1, B2 so viele Betriebsstunden wie möglich erreichen können, wird die Gruppe GR1 an erster Stelle innerhalb der Kaskade 1 angeordnet. Da der Gaskessel G1 gegenüber dem zweiten Gaskessel G2 bevorzugt betrieben werden soll, wird die Gruppe GR2 mit dem Gaskessel G1 an zweiter Stelle vor der Gruppe GR3 mit dem Gaskessel G2 in der Kaskade 1 angeordnet.

Die Steuereinrichtung empfängt auch Energiebereitstellungsanforderungen nach einer angeforderten elektrischen Energie beziehungsweise Leistung (beispielsweise in Form einer Stromanforderung oder einer Spannungsanforderung). Die BHKWs B1, B2 können daher neben einer Energiebereitstellungsanforderung für Wärme auch zum Erfüllen der Anforderungen nach elektrischer Energie geschaltet beziehungsweise geregelt werden. Daher werden die BHKWs B1, B2 einer zweiten Energieform F2 für elektrische Energie zugeordnet. Energiebereitstellungsanforderungen nach elektrischer Energie und/oder Schaltanforderung für Energieerzeuger, die elektrische Energie bereitstellen werden von der Steuereinrichtung S berücksichtigt. Die BHKWs würden in diesem Beispiel wie folgt zum Bereitstellen von Wärme betrieben werden:
Das erste BHKW B1 an erster Stelle innerhalb der Gruppe GR1 (je nach Laufzeitausgleich kann dies auch das zweite BHKW B2 sein) wird bei Unterschreiten einer geforderten Anlagenvorlauftemperatur eingeschaltet. Die geforderte Anlagenvorlauftemperatur wird hierbei stromabwärts vom zweiten Gaskessel G2 im Vorlauf V gemessen. Bei Überschreiten eines vorbestimmten Schwellenwertes der Temperatur im Pufferspeicher P, die an einer unten im Pufferspeicher P liegenden Schicht gemessen wird, wird das erste BHKW B1 ausgeschaltet.

Die Steuerung des zweiten BHKW B2 an zweiter Stelle in Gruppe GR1 erfolgt in ähnlicher Weise, wie die des ersten BHKW B1. Wenn trotz eingeschaltetem BHKW B1 ein Unterschreiten der geforderten Anlagenvorlauftemperatur erfasst wird, schaltet die Steuereinrichtung S das zweite BHKW B2 hinzu. Bei Überschreiten eines vorbestimmten Schwellenwertes der Temperatur im Pufferspeicher P, die an einer in der Mitte des Pufferspeicher P liegenden Schicht gemessen wird, schaltet die Steuereinrichtung S das zweite BHKW B2 wieder ab.

Der Gaskessel G1 wird bei bereits eingeschalteten BHKWs B1 und B2 bei Unterschreiten der geforderten Anlagenvorlauftemperatur eingeschaltet. Das Ausschalten des Gaskessels G1 erfolgt wenn ein Schwellenwert der Temperatur im Pufferspeicher P, die in einer oben liegenden Schicht gemessen wird, überschritten wird.

Sind die ersten drei Energieerzeuger in Kaskade 1 der Energieform Wärme F1 bereits in Betrieb aber es wird ein Unterschreiten der geforderten Anlagenvorlauftemperatur gemessen, so wird der zweite Gaskessel G2 eingeschaltet. Sobald die geforderte Anlagenvorlauftemperatur überschritten wird schaltet die Steuereinrichtung S den Gaskessel G2 wieder ab.

Insbesondere werden die Anforderungen aus der Energieform Wärme und aus der Energieform elektrische Energie von der Steuerungseinrichtung koordiniert erfasst und weiterverarbeitet. Dies entspricht einer Kompromissfindung der Anforderungen aus der Energieform Wärme und der Energieform elektrische Energie. Würde die Energieform Wärme beispielsweise ein Ausschalten eines BHKWs fordern, würde die Steuerungseinrichtung S zunächst prüfen, ob die Energieform elektrische Energie weiterhin den Betrieb des BHKWs fordert, bevor die Freigabe entzogen wird. Hierzu kann die Steuereinrichtung S dafür ausgelegt sein, den Energiebedarf der betreffenden Energieform abzuschätzen und die Entscheidung über das Entziehen der Freigabe davon abhängig machen, ob ein Weiterbetreiben des BHKWs erforderlich ist. Durch dieses Verfahren kann die Anzahl der Ein- und Ausschaltvorgänge minimiert werden, wodurch ein Verschleiß der Energieerzeuger reduziert werden kann.

Gemäß dem Ausführungsbeispiel kann eine Freigabe an einen Energieerzeuger erteilt werden, wenn mindestens eine Energieform die Freigabe des Energieerzeugers fordert. Die Freigabe kann dann entzogen werden, wenn keine Energieform mehr den Betrieb des Energieerzeugers fordert.

### Viertes Ausführungsbeispiel

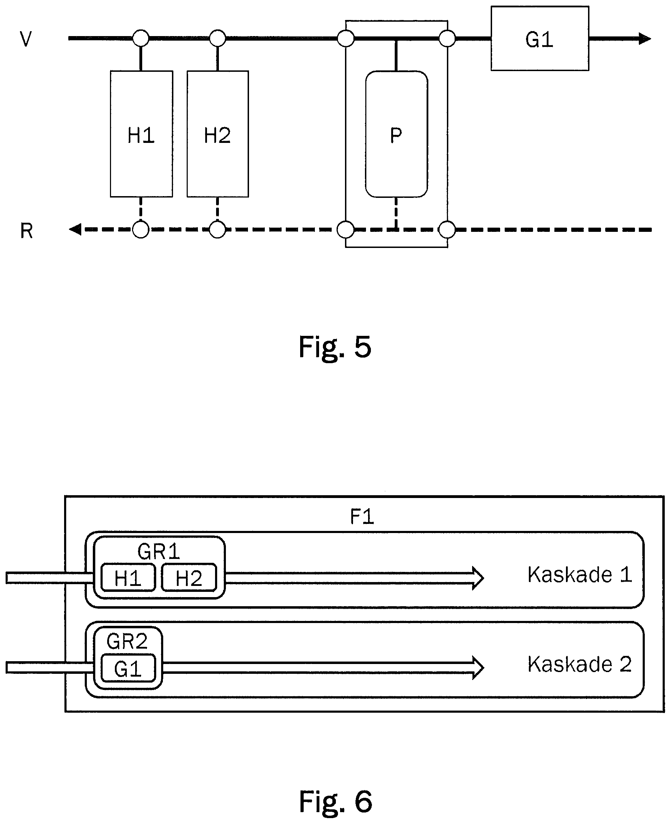

Figur 5 zeigt ein Hydraulikschema einer Energieversorgungsanlage gemäß einem vierten Ausführungsbeispiel. Ähnlich wie im dritten Ausführungsbeispiel weist die Energieversorgungsanlage einen Pufferspeicher P zwischen Vorlauf V und Rücklauf R und einen Gaskessel G1 im Vorlauf V stromabwärts vom Pufferspeicher P auf. Ein erster Holzkessel H1 und ein zweiter Holzkessel H2 sind jeweils parallel zueinander und parallel zum Pufferspeicher P stromaufwärts am Vorlauf V1 angeordnet.

Eine Steuereinrichtung S der Energieversorgungsanlage gemäß dem vierten Ausführungsbeispiel ist so eingerichtet, dass die Holzkessel H1, H2 bevorzugt eingesetzt werden, wobei der Gaskessel G1 die Spitzenlast abdecken soll. Hierdurch wird der günstigere Brennstoff Holz für die Grundlast (Erfüllen einer Mindestenergieanforderung) verwendet, während die Trägheit der Holzkessel H1, H2 durch die Verwendung eines schnell einschaltbaren und auch schnell wieder ausschaltbaren Gaskessel G1 ausgeglichen wird. Der Gaskessel G1 kann somit eine Spitzenlast bereitstellen (Erfüllen einer Maximalenergieanforderung).

Somit kann durch die auf die spezifischen Eigenschaften der Energieerzeuger angepasste Steuerung der multivalenten Energieversorgungsanlage eine hohe Regelgüte erreicht werden. Eine Energiebereitstellungsanforderung in Form einer geforderten Anlagenvorlauftemperatur am Übergang zu einem Verbraucherkreislauf (nicht dargestellt) kann somit schnell erreicht und anschließend gehalten werden. Dies kann insbesondere dann von Vorteil sein, wenn auf der Verbraucherseite sensible Prozesse angeschlossen sind (zum Beispiel Produktionsmaschinen).

Als weitere Anforderung an die Steuerung der multivalenten Energieversorgungsanlage kann vorgegeben werden, dass zwischen den Holzkesseln ein Laufzeitausgleich stattfinden soll. Außerdem sollen die Holzkessel H1, H2 im oberen Leistungsbereich betrieben werden, wo eine besonders saubere also schadstoffarme Verbrennung stattfinden kann und ein möglichst hoher Wirkungsgrad erreicht wird. Hiermit kann zudem eine möglichst lange Betriebsdauer zwischen Wartungsvorgängen erreicht werden.

Gemäß dem Stand der Technik wird üblicherweise eine feste Ein- und Ausschaltfolge vorgegeben, wobei kein Laufzeitausgleich erfolgen kann. Der erste Holzkessel H1 würde dann wesentlich mehr Betriebsstunden erhalten, als der zweite Holzkessel H2. Bei einer Laständerung (zum Beispiel durch Hochfahren der Energieversorgungsanlage nach einem Stillstand, etwa nach einer Wartung oder an einem Wochenende) wird zunächst der erste Holzkessel H1 angeschaltet. Dieser benötigt jedoch eine relativ lange Zeit, bis eine ausreichend große Wärmemenge geliefert werden kann, um eine Energiebereitstellungsanforderung zu erfüllen. Daher würde (gegebenenfalls nach einer vorbestimmten Wartezeit) bei einem solchen Verfahren bei Nichterfüllen der Energiebereitstellungsanforderung zunächst der zweite Holzkessel H2 eingeschaltet werden. Erst nach einer weiteren Wartezeit könnte der Gaskessel G1 ebenfalls eingeschaltet werden. Der Gaskessel G1 könnte die geforderte Wärmemenge in relativ kurzer Zeit liefern. Bei einem solchen Vorgehen gemäß dem Stand der Technik würde eine relativ lange Zeit verstreichen, bis die geforderte Wärmemenge bereitgestellt werden kann. In anderen Worten, die Regelgüte der Energieversorgungsanlage wäre bei einem solchen Vorgehen stark eingeschränkt. Als nachteilige Folge könnten Beispielsweise Produktionsmaschinen im Verbraucherkreislauf erst mit großer Zeitverzögerung in Betrieb gehen.

Nach einer längeren Aufwärmzeit liefern die Holzkessel H1, H2 Wärme (z. B. nach einer Stunde) und die Anlagenvorlauftemperatur steigt an, da mehr Wärme produziert wird als durch die Verbraucher oder den Pufferspeicher P abgenommen werden kann. Dabei kann die Vorlauftemperatur über den geforderten Sollwert ansteigen. Typischerweise wird das Überschwingen der Vorlauftemperatur über den Sollwert als Kriterium zum Ausschalten des Gaskessels G1 verwendet. Hieraus resultiert eine entsprechend schlechte Regelgüte, wodurch die wärmeverbrauchende Produktionsmaschinen im Verbraucherkreislauf eventuell außer Betrieb gehen könnten. Ist die abgenommene Leistung geringer als die Summe der Nennleistung beider Holzkessel H1, H2, werden die Holzkessel H1, H2 in ungünstigen Betriebspunkten (jeweils mit niedriger Leistung) betrieben.

Ist die abgenommene Leistung geringer als die Summe der Grundleistung beider Holzkessel H1, H2, wird der zweite Holzkessel nach kurzer Zeit außer Betrieb genommen. Eine schlechte Energiebilanz und negative Auswirkungen auf Lebensdauer und Wartungsintensität der Holzkessel H1, H2 sind die Folge.

Figur 6 zeigt, wie eine erfindungsgemäße Reihenfolge des Einschaltens und/oder Ausschaltens für die Energieerzeuger der Energieversorgungsanlage des vierten Ausführungsbeispiels bestimmt werden kann. Die Holzkessel H1, H2 sind in einer Gruppe GR1 zusammengefasst, so dass wie oben beschrieben ein Laufzeitausgleich zwischen den beiden gleichartigen Energieerzeugern H1, H2 stattfinden kann.

Würde man den Gaskessel G1 ebenfalls in der ersten Kaskade 1 als letzten Energieerzeuger anordnen, könnte er entsprechend der sequentiellen Reihenfolge in der Kaskade 1 erst dann eingeschaltet werden, wenn die Holzkessel H1, H2 bereits in Betrieb sind und die benötige Energiemenge nicht ausreicht, um die Energiebereitstellungsanforderung EA zu erfüllen Der gut regelbare Gaskessel G1 könnte mithin nicht zum schnellen Erfüllen von Spitzenlasten eingesetzt werden.

Die Holzkessel H1, H2 würden ähnlich wie die BHKWs B1, B2 im dritten Ausführungsbeispiel ein- und ausgeschaltet werden. Der Gaskessel G1 hier wird jedoch in einer separaten Kaskade 2 angeordnet und kann somit in Abhängigkeit einer am Anlagenvorlauf gemessenen Differenz zwischen einer Isttemperatur und einer Solltemperatur betrieben werden. Folglich kann der Gaskessel G1 unabhängig vom Schaltzustand der Holzkessel H1, H2 betrieben werden, so dass eine verbesserte Regelgüte erreicht wird. Um zu vermeiden, dass die Holzkessel H1, H2 in ungünstigen Arbeitspunkten mit geringer Leistung betrieben werden, obwohl die Leistung nur eines Holzkessels H1, H2 zur Deckung der benötigen Leistung ausreichen würde, kann diese Situation durch die Auswertung der Leistungsbilanz innerhalb der Gruppe Gr1 detektiert werden. Ein entsprechendes Kriterium zum Ausschalten des zweiten Holzkessels H2 kann hierdurch festgelegt werden.

Beim Hochfahren der Energieversorgungsanlage nach einem längeren Stillstand erkennt die Steuereinrichtung S, dass die Energiebereitstellungsanforderung durch nur einen Holzkessel H1 erfüllt werden könnte. Somit wird der zweite Holzkessel H2 erst gar nicht durch die Steuereinrichtung S freigegeben. Da der Holzkessel H1 aber eine lange Zeit benötigt, um aufzuheizen, wird der Gaskessel G1 zum Bereitstellen der geforderten Wärmemenge eingeschaltet. Sobald der Holzkessel H1 ausreicht, um die Forderung zu erfüllen wird der Gaskessel G1 wieder ausgeschaltet.

Sinkt der Wert der geforderten Energiemenge so weit ab, dass die vom Holzkessel H1 bereitgestellte Vorlauftemperatur die geforderte Anlagenvorlauftemperatur überschreitet, kann die Steuereinrichtung die gelieferte Wärme im Pufferspeicher P zwischenspeichern. Ist ausreichend Wärme im Pufferspeicher P vorhanden, so kann dieser wie ein Energieerzeuger zum Bereitstellen von Wärme von der Steuereinrichtung S herangezogen werden, wodurch insbesondere schnell auftretende Leistungsschwankungen ausgeglichen werden können.

### Fünftes Ausführungsbeispiel

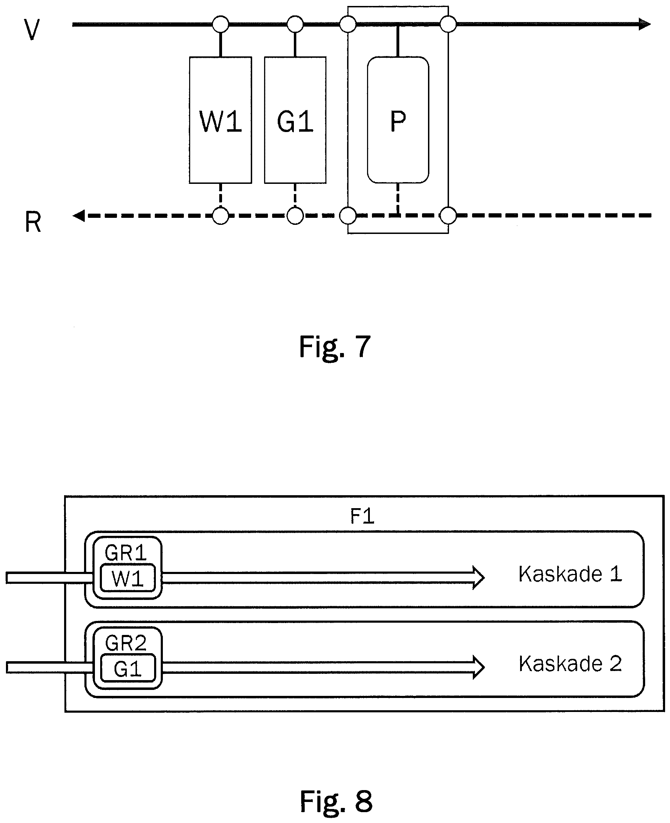

Figur 7 zeigt ein Hydraulikschema einer Energieversorgungsanlage gemäß einem fünften Ausführungsbeispiel. Eine Wärmepumpe W1 und ein Gaskessel G1 sind parallel zu einander und parallel zu einem Pufferspeicher P zwischen Vorlauf V und Rücklauf R angeordnet.

Die Wärmepumpe W1 soll bevorzugt eingesetzt werden und eine Mindestenergieanforderung erfüllen. Der Gaskessel G1 soll als Spitzenlastkessel lediglich die Differenz zur geforderten Wärmemenge decken und somit eine Maximalenergieanforderung erfüllen.

Damit die Wärmepumpe W1 zuerst eingesetzt wird, muss gemäß dem Stand der Technik eine feste (sequenzielle) Ein- und Ausschaltfolge vorgegeben werden. Die Wärmepumpe W1 kann allerdings bei einer zu hohen Rücklauftemperatur nicht in Betrieb gehen. Hier könnte also ein energieerzeugerspezifisches Kriterium vorliegen, das als Schaltzustand fordert, dass die Wärmepumpe ausgeschaltet bleiben muss. Aufgrund der festen Einschaltreihenfolge kann dann aber auch der Gaskessel G1 nicht in Betrieb genommen werden. Die geforderte Wärmemenge kann dann nicht geliefert werden. Dies ist ein Beispiel dafür, wie ein energieerzeugerspezifisches Kriterium EEK in Abhängigkeit eines Anlagenparameters (Forderung nach einer Rücklauftemperatur) ein Anschalten des Energieerzeugers verhindern kann und somit in einer sequenziellen Schaltreihenfolge ein Anschalten weiterer Energieerzeuger blockiert.

Die erfindungsgemäße Lösung dieses Problems wird anhand von Figur 8 beschrieben. Die Wärmepumpe W1 und der Gaskessel G1 sind jeweils in eigene Kaskaden 1 und 2 eingeteilt. Dies ermöglicht, dass die beiden Energieerzeuger W1, G1 parallel und unabhängig voneinander geschaltet werden können. Damit die Wärmepumpe W1 bevorzugt eingesetzt wird, bestimmt die Steuereinrichtung S die Sollwert- und Schaltvorgaben zum Erfüllen einer Energiebereitstellungsanforderung in Abhängigkeit von energieerzeugerspezifischen Kriterien. In dem vorliegenden Beispiel beziehen sich die erzeugerspezifischen Kriterien auf die Art des Energieerzeugers und seine dynamische Eigenschaft. So erfasst die Steuereinrichtung S die Restriktionen der Energieerzeuger, die zum Beispiel ein Ausschalten der Wärmepumpe W1 bei zu hoher Rücklauftemperatur erzwingen und eine bestimmte Wartezeit zwischen Schaltvorgängen vorgeben.

Anders als in Figur 8 gezeigt könnten die Wärmepumpe W1 und der Gaskessel G1 auch zusammen in einer Kaskade 1 platziert werden. Würde nun W1 bei Überschreiten eines festgelegten Temperatur-Schwellenwerts ausgeschaltet, so würde die Steuereinrichtung S eine Restriktion von W1 bekommen, dass W1 für eine bestimmte Zeit nicht mehr einschaltbar ist. Dies würde dazu führen, dass W1 in der Einschalt-Reihenfolge übersprungen würde und der nächste Energieerzeuger, hier der Gaskessel G1, bei Bedarf eingeschaltet werden könnte.

### Sechstes Ausführungsbeispiel

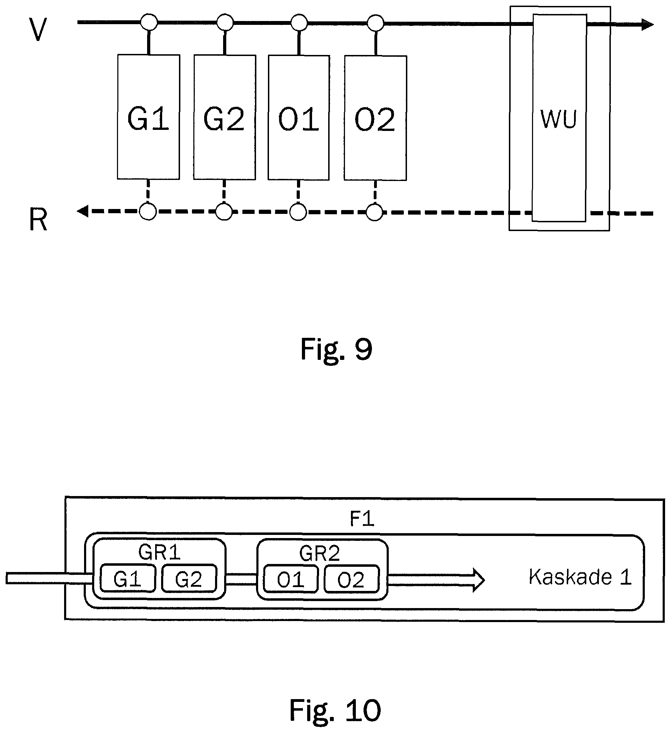

In einem sechsten Ausführungsbeispiel umfasst die Energieversorgungsanlage zwei Gaskessel G1, G2 und zwei Ölkessel 01, 02, die alle parallel zueinander zwischen Vorlauf V und Rücklauf R angeordnet sind. Für die Übergabe der Wärme in einen Verbraucherkreislauf ist eine Wärmeübergabe vorgesehen. Ein Hydraulikschema der Energieversorgungsanlage gemäß dem sechsten Ausführungsbeispiel ist in Figur 9 dargestellt.

Bei der Steuerung der Energieversorgungsanlage sollen die aktuellen Energiekosten und/oder die Verfügbarkeit von Erdgas und Heizöl berücksichtigt werden. Der Energieträger mit den geringeren Energiekosten soll bevorzugt eingesetzt werden. Außerdem soll zwischen den Kesseln gleicher Brennstoffart ein Laufzeitausgleich stattfinden. Alle Kessel können in nur einer Kaskade betrieben werden. Um die oben formulierte Aufgabe zu erfüllen werden die Gaskessel G1, G2 und die Ölkessel O1, O2 wie in Figur 10 dargestellt jeweils einer eigenen Gruppe zugeordnet. Innerhalb der Gruppen findet jeweils ein Laufzeitausgleich statt. In Abhängigkeit der Energiepreise wird die Reihenfolge der Gruppen gewählt, so dass die Gruppe mit den geringeren Wärmegestehungskosten zuerst eingeschaltet wird.

### Siebtes Ausführungsbeispiel

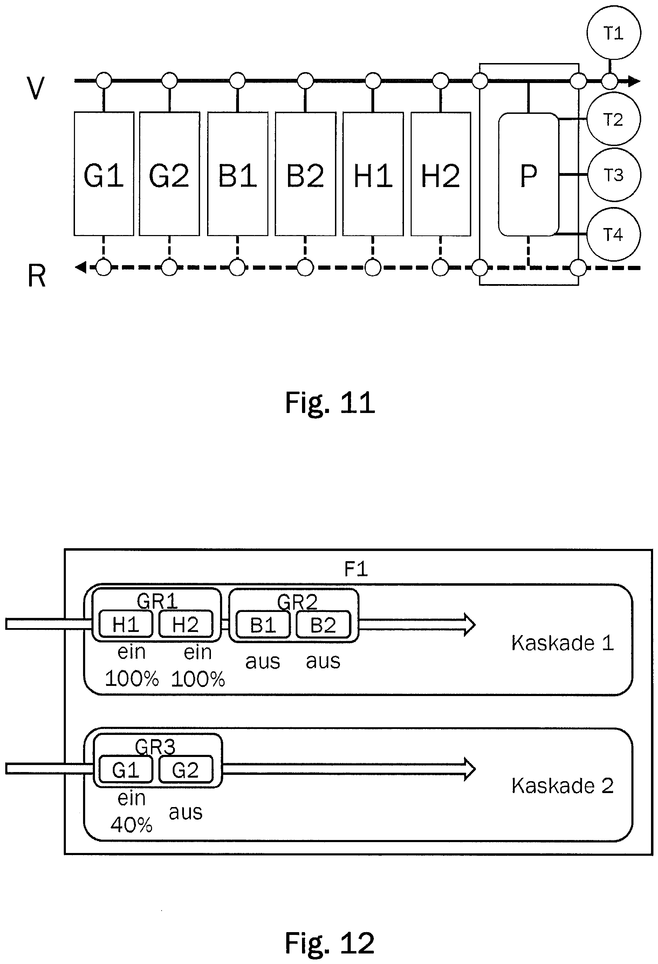

Figur 11 zeigt ein Hydraulikschema einer multivalenten Energieversorgungsanlage gemäß einem siebten Ausführungsbeispiel. Die multivalente Energieversorgungsanlage umfasst je zwei Gaskessel G1, G2, die Energie in Form von Wärme bereitstellen, zwei BKHWs B1, B2, die Energie in Form von Wärme und elektrischen Strom bereitstellen, zwei Holzkessel H1, H2, die Energie in Form von Wärme bereitstellen, und einen Pufferspeicher P. Außerdem ist im Vorlauf V ein Temperatursensor T1 angeordnet, der die Anlagenvorlauftemperatur misst. Im Pufferspeicher P sind drei Temperatursensoren T2, T3, T4 angeordnet, die jeweils die Temperatur im Pufferspeicher P messen, respektive in einem oberen Bereich, in einem mittleren Bereich und in einem unteren Bereich des Pufferspeichers. Die Gaskessel G1, G2 nutzen Erdgas aus einer Gaszuleitung als Energieträger, die BHKWs B1, B2 nutzen Diesel aus einem Brennstofftank und die Holzkessel H1, H2 nutzen Holzpellets aus einem Holzpelletspeicher, der die Holzkessel H1, H2 über eine Fördereinrichtung mit Brennstoff beschickt.

Jeder der Energieerzeuger G1, G2, B1, B2, H1, H2 weist jeweils eine Regeleinrichtung zum Regeln von Regelgrößen des jeweiligen Energieerzeugers G1, G2, B1, B2, H1, H2 auf. Diese Regelgrößen umfassen unter anderem eine abgegebene Wärmeleistung und einen Volumenstrom eines fluiden Trägermediums durch die Energieerzeuger G1, G2, B1, B2, H1, H2, an das die Wärme abgegeben wird. Zum Steuern des Volumenstroms sind in den Energieerzeugern G1, G2, B1, B2, H1, H2 selbst oder in den mit den Energieerzeugern G1, G2, B1, B2, H1, H2 verbundenen Leitungen (Vorlauf V und/oder Rücklauf R) jeweils Ventile und/oder Drosselklappen und/oder Umwälzpumpen angeordnet. Bei den BHKWs B1, B2 gehört zu den Regelgrößen auch ein abgegebener elektrischer Strom beziehungsweise eine elektrische Spannung.

Die Steuerung der Energieversorgungsanlage durch eine Steuereinrichtung S zum Erfüllen einer erfassten Energiebereitstellungsanforderung EA, die zum Beispiel eine geforderte Anlagenvorlauftemperatur am Messpunkt T1 oder eine Pufferspeichertemperatur an einem der drei Messpunkte T2, T3, T4 des Pufferspeichers P festlegt, erfolgt in Abhängigkeit der jeweils durch die Energieerzeuger G1, G2, B1, B2, H1, H2 genutzten Energieträger Gas, Diesel und Holz. Holz soll hierbei als bevorzugter Energieträger verwendet werden. Ferner sollen die BHKWs B1, B2 möglichst im Dauerbetrieb laufen. Um die Energiebereitstellungsanforderung EA zu erfüllen, bestimmt die Steuereinrichtung S Sollwerte SW für jeden der Energieerzeuger G1, G2, B1, B2, H1, H2 und gibt diese an die Regeleinrichtungen der Energieerzeuger G1, G2, B1, B2, H1, H2 aus. Die Sollwerte SW können Vorgaben für Regelgrößen der Energieerzeuger G1, G2, B1, B2, H1, H2 sowie Anweisungen zum Einschalten und/oder Ausschalten der Energieerzeuger G1, G2, B1, B2, H1, H2 umfassen.

Die Steuereinrichtung S erfasst eine Reihenfolge des Einschaltens und/oder Ausschaltens der Energieerzeuger G1, G2, B1, B2, H1, H2. Die Reihenfolge wird anhand der in Figur 12 dargestellten Einteilung der Energieerzeuger G1, G2, B1, B2, H1, H2 in Gruppen und Kaskaden festgelegt. Die beiden gleichartigen Holzkessel H1, H2 werden einer gemeinsamen Gruppe GR1 zugeordnet. Wie oben beschrieben kann in einer Gruppe ein Laufzeitausgleich zwischen den Holzkesseln H1, H2 stattfinden. In entsprechender Weise werden die beiden BHKWs B1, B2 der Gruppe GR2 zugeordnet und ebenfalls mit Laufzeitausgleich betrieben. Die beiden Gaskessel G1 und G2 werden einer Gruppe GR3 zugeordnet. Auch zwischen den Gaskessel G1, G2 kann ein Laufzeitausgleich stattfinden.

Die Holzkessel H1, H2 und die BHKWs B1, B2 werden als bevorzugte Energieerzeuger eingestuft, da ihr Betrieb im Vergleich zu den Gaskesseln G1, G2 in Hinblick auf die Verfügbarkeit der genutzten Energieträger Vorteile aufweist. Zudem soll in einer ersten Betriebsart möglichst ununterbrochen elektrische Energie bereitgestellt werden. Die Gruppen GR1 und GR2 werden dazu wie in Figur 12 dargestellt einer ersten Kaskade 1 zugeordnet. Die Reihenfolge der Gruppen GR1 und GR2 innerhalb der Gruppe kann anhand von gruppenspezifischen Kriterien erfolgen. So kann die Reihenfolge zum Beispiel je nach aktuellen Brennstoffkosten festgelegt werden, in Abhängigkeit von geplanten Wartungsmaßnahmen erfolgen oder von einer Energiebereitstellungsanforderung für elektrische Energie abhängig gemacht werden. Außerdem können auch andere spezifische Eigenschaften der Energieerzeuger die Reihenfolge der Gruppen GR1, GR2 in der Kaskade 1 beeinflussen.

In einer weiteren Betriebsart der multivalenten Energieversorgungsanlage kann die Steuereinrichtung S vorgegeben werden, dass eine möglichst große Energiemenge im Pufferspeicher P bevorratet werden soll. Für die Puffertemperaturregelung wird hierbei ein Puffertemperatursensor T4 an einem unteren Bereich des Pufferspeichers P ausgewählt. Die Puffersolltemperatur wird beispielsweise auf 70°C eingestellt. Die Steuereinrichtung S sorgt dann dafür, dass der Pufferspeicher P vollständig auf mit einer Temperatur von 70°C geladen wird, indem die Energieerzeuger G1, G2, B1, B2, H1, H2 zum Bereitstellen der benötigten Wärmemenge betrieben werden.

Soll der Pufferspeicher P in einer weiteren Betriebsart nur ungefähr zur Hälfte mit Wärme bevorratet werden, wird ein Puffertemperatursensor T3 in einem mittleren Bereich des Pufferspeichers P für die Puffertemperaturregelung ausgewählt.

In einer Betriebsart, bei der keine Pufferbevorratung erwünscht ist wird ein Puffertemperatursensor T2 in einem oberen Bereich des Pufferspeichers P für die Puffertemperaturregelung ausgewählt. Die Vorgabe einer Puffersolltemperatur ist nicht erforderlich, da eine Energieerzeugervorlaufsolltemperatur aus einer Anlagenvorlaufsolltemperatur errechnet werden kann. Es wird nur so viel Energie erzeugt, wie von den Verbrauchern aufgenommen wird, der Pufferspeicher P wird in diesem Fall nicht geladen. Die Anlagenvorlauftemperatur kann beispielweise von einem Temperatursensor T1 am Vorlauf V gemessen werden.

Die Leistungsabgabe von Holzkesseln kann nur schlecht moduliert werden. Die beiden Holzkessel H1, H2 des Ausführungsbeispiels können entweder bei maximaler Leistung betrieben werden oder ausgeschaltet sein. Wie zuvor beschrieben sind die Vorgänge des Ein- beziehungsweise Ausschaltens vom Zuführen beziehungsweise Aufbrauchens des Brennstoffs Holz in der Brennkammer abhängig und somit relativ zeitintensive Prozesse. Die Holzkessel H1, H2 reagieren somit nur sehr träge auf eine Regelgrößenänderung und können entweder keine Leistung (Minimalwert) oder maximale Leistung (Maximalwert) abgeben. Aufgrund dieser spezifischen Eigenschaften werden die Holzkessel in die gemeinsame Gruppe GR1 eingeteilt.

Ist mindestens einer der Holzkessel H1, H2 in Betrieb, so kann er bis zum vollständigen Verbrennen des geladenen Brennstoffs erst einmal nicht mehr ausgeschaltet werden. Der Schaltzustand des Holzkessels H1, H2 ist dann, dass der Holzkessel H1, H2 eingeschaltet sein muss. Die Regeleinrichtung des Holzkessels teilt dann der Steuereinrichtung S mit, dass eine als energieerzeugerspezifisches Kriterium EEK eine Restriktion für den Holzkessel H1 oder H2 vorliegt, die besagt, dass der Holzkessel eingeschaltet sein muss beziehungsweise nicht ausgeschaltet werden kann.

Hat beispielsweise einer der Holzkessel H1, H2 eine Maximalbetriebszeit erreicht, und muss er gewartet werden, so kann die Steuereinrichtung S eine entsprechende Restriktion als energieerzeugerspezifisches Kriterium EEK erfassen und als Ergebnis des Erfassens ermitteln, dass der Holzkessel H1 oder H2 ausgeschaltet sein muss.

Da die Holzkessel H1, H2 aufgrund ihrer Trägheit möglichst dauerhaft betrieben werden, eignet sich die Gruppe GR1 mit den Holzkesseln H1, H2 besonders gut zum Bereitstellen einer Mindestenergieanforderung der Energieversorgungsanlage in Form von Wärme. Alternativ kann auch die Gruppe GR2 mit den BHKWs B1, B2 zum Bereitstellen einer Mindestenergieanforderung der Energieversorgungsanlage in Form von Wärme verwendet werden. Dabei kann die Gruppe GR2 auch gleichzeitig eine Mindestenergieanforderung der Energieversorgungsanlage in Form von elektrischer Energie bereitstellen. Die Steuereinrichtung S kann eine der beiden Gruppen GR1 und GR2 zum Bereitstellen der Mindestenergieanforderung in Abhängigkeit der gewählten Betriebsart auswählen.

Die in ihrer Leistungsabgabe gut regelbaren und schnell auf Regelgrößenänderung reagierenden Gaskessel G1, G2 eignen sich aufgrund dieser spezifischen Eigenschaften besonders gut zum Bereitstellen einer Maximalenergieanforderung. Insbesondere wenn die von den Holzkesseln H1, H2 bereitgestellte Wärmemenge nicht ausreicht um eine maximale Wärmeanforderung zu erfüllen, werden die Gaskessel G1, G2 eingeschaltet, um die Anforderung zu erfüllen.

Die Steuereinrichtung S der Energieversorgungsanlage des siebten Ausführungsbeispiels kann ferner eine Energieerzeugererfassungseinrichtung 14 aufweisen. Diese erfasst, welche Energieformen die Energieerzeuger G1, G2, B1, B2, H1, H2 jeweils bereitstellen können. Liegt eine durch eine Anforderungserfassungseinrichtung 10 erfasste Energiebereitstellungsanforderung EA zum gleichzeitigen Bereitstellen von Wärme und elektrischer Energie vor, so ermittelt die Energieerzeugererfassungseinrichtung 14, dass die BHKWs B1, B2 Wärme und elektrische Energie bereitstellen können und gibt diese Information an eine Sollwertbestimmungseinrichtung 11 der Steuereinrichtung S weiter. Die Sollwertbestimmungseinrichtung 11 ermittelt dann Sollwerte SW für die BHKWs B1, B2 zum Bereitstellen von Wärme und elektrischer Energie in Abhängigkeit der Energiebereitstellungsanforderung EA. Eine Sollwertausgabeeinrichtung 12 gibt die Sollwerte SW an die Regeleinrichtungen der BHKWs B1, B2 über eine geeignete Kommunikationsschnittstelle aus.

Figur 12 illustriert die Einteilung der Energieerzeuger des siebten Ausführungsbeispiels in Gruppen und Kaskaden. Außerdem wird ein beispielhafter Anlagenzustand angezeigt, bei dem die beiden Holzkessel H1, H2 der ersten Gruppe GR1 beide eingeschaltet sind und unter Volllast laufen. Die beiden BHKWs B1, B2 der zweiten Gruppe GR2 sind ausgeschaltet. Der erste Gaskessel G1 ist eingeschaltet und wird modulierend betrieben bei einer Last von 40% der Maximalleistung.

### Achtes Ausführungsbeispiel

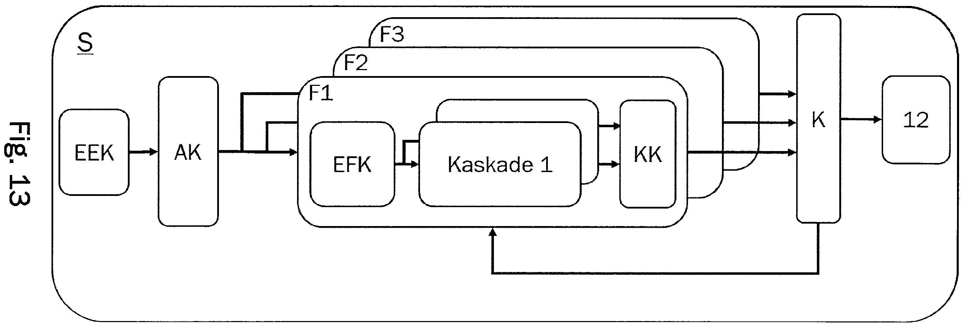

Ein achtes Ausführungsbeispiel ist in Figur 13 dargestellt. Das Flussdiagramm illustriert, in welcher Reihenfolge Kriterien unterschiedlich hoher Priorität von der Steuereinrichtung S einer multivalenten Energieversorgungsanlage ausgewertet werden. Der große Pfeil zeigt die Richtung von höchster zu niedrigster Priorität an. Die multivalente Energieversorgungsanlage kann eine beliebige Anzahl von Energieerzeugern aufweisen.

Jeder der Energieerzeuger kann drei verschiedene Schaltzustände einnehmen: entweder der Energieerzeuger muss eingeschaltet sein, der Energieerzeuger muss ausgeschaltet sein, der Energieerzeuger darf eingeschaltet oder ausgeschaltet sein. Welchen Schaltzustand ein Energieerzeuger einnimmt wird durch energieerzeugerspezifische Kriterien EEK festgelegt.

In dem Ausführungsbeispiel haben energieerzeugerspezifische Kriterien EEK die höchste Priorität. Für jeden aus einer Vielzahl von Energieerzeugern erfasst die Steuereinrichtung S, ob ein energieerzeugerspezifisches Kriterium EEK besteht. Das Ergebnis des Erfassens ist einer der drei möglichen oben genannten Schaltzustände. Einem Energieerzeuger kann zum Beispiel eine Mindestlaufzeit vorgegeben sein. Die Mindestlaufzeit kann verhindern, dass der Energieerzeuger vor Ablauf der Mindestlaufzeit ausgeschaltet werden kann. Die Mindestlaufzeit beginnt nach dem Einschalten des Energieerzeugers zu laufen. Dem Energieerzeuger kann auch eine Mindeststandzeit vorgegeben sein, die verhindern kann, dass der Energieerzeuger vor Ablauf der Mindeststandzeit eingeschaltet wird. Die Mindeststandzeit beginnt nach dem Ausschalten des Energieerzeugers zu laufen Entsprechend können weitere energieerzeugerspezifische Kriterien EEK für einen Energieerzeuger festgelegt werden, die ein Einschalten oder Ausschalten verhindern können.

Darüber hinaus kann ein energieerzeugerspezifisches Kriterium EEK auch minimale oder maximale Sollwertgrenzen festlegen. Beispielsweise kann ein energieerzeugerspezifisches Kriterium EEK einen maximalen Volumenstrom eines Trägermediums durch den Energieerzeuger und/oder eine maximale Leistung festlegen. Hierdurch kann zum Beispiel verhindert werden, dass der Energieerzeuger mit einer zu hohen Leistung betrieben wird, um beispielsweise einen hohen Verschleiß des Energieerzeugers zu verhindern und/oder um den Energieerzeuger möglichst effizient zu betreiben.

Da die energieerzeugerspezifischen Kriterien EEK höchste Priorität haben sollen, kann die Steuereinrichtung S diese Kriterien nicht verändern. Die Steuereinrichtung S muss die Kriterien unverändert übernehmen. Diese Hierarchie kann zum Schutz der Energieerzeuger dienen.

An zweithöchster Stelle in der Reihenfolge der Kriterien folgen anlagenspezifische Kriterien AK. Diese Kriterien können global für die gesamte Energieversorgungsanlage festgelegt werden und unabhängig von Energieformen sein. Beispielsweise kann eine minimale Puffertemperatur festgelegt werden, die nicht unterschritten werden darf. Hierdurch kann ein Pufferfrostschutz gewährleistet werden.

Ein weiteres Beispiel für ein anlagenspezifisches Kriterium AK ist eine maximale Puffertemperatur. Durch Vorgeben einer maximalen Puffertemperatur kann zum Beispiel der Gesamtenergieverbrauch der Energieversorgungsanlage optimiert werden.

Um einen Anlagenfrostschutz zu gewährleisten kann auch eine minimale Anlagenvorlauftemperatur festgelegt werden. Die Anlagenvorlauftemperatur kann für einen oder auch mehrere bestimmte(n) Messpunkt(e) im Vorlauf der Energieversorgungsanlage definiert werden. Die minimale Anlagenvorlauftemperatur kann auch in Abhängigkeit einer Außentemperatur bestimmt werden, da nur bei Unterschreiten einer bestimmten Außentemperatur ein Anlagenfrostschutz notwendig sein kann. Ferner kann der Anlagenfrostschutz nur zu bestimmten Jahreszeiten aktiviert sein.

Außerdem kann auch eine maximale Anlagenvorlauftemperatur festgelegt werden. Entsprechend können auch minimale und maximale Anlagenwerte für elektrische Energie und/oder Kälte vorgegeben werden. Durch Vorgeben von anlagenspezifischen Kriterien kann auch ein Notbetrieb der Energieversorgungsanlage realisiert werden. Bei einem Notbetrieb können die Energieerzeguer unabhängig voneinander nur durch die Regeleinrichtungen gesteuert weiterbetrieben werden.

Bei einem Notaus, beispielsweise bei einem festgestellten Rohrbruch und/oder bei Betätigen eines Notaus-Schalters, können neben Ausschaltforderungen an alle Energieerzeuger auch Vorgaben an Ventile und/oder Pumpen in der Energieversorgungsanlage ausgegeben werden, so dass bestimmte Ventile geschlossen und/oder bestimmte Pumpen ausgeschaltet werden.

Für jede Energieform F1-F3 können parallel Kriterien festgelegt werden, die unabhängig voneinander berücksichtigt werden. Innerhalb jeder Energieform F1-F3 können wiederum Kriterien in hierarchischer Folge festgelegt werden. An erster Stelle der Prioritätenreihenfolge innerhalb einer Energieform F1-F3 können energieformspezifische Erzeugerkriterien EFK festgelegt werden.

Energieformspezifische Erzeugerkriterien EFK können beispielsweise jahreszeitabhängig eingestellt werden. Beispielsweise kann im Sommer die Energieform Wärme komplett ausgeschaltet werden, beziehungsweise nur noch für das Bereitstellen von Warmwasser an bestimmte Verbraucher eingestellt werden. Entsprechend kann im Winter ein Erhöhter Verbrauch von Wärme berücksichtigt werden. In ähnlicher Weise können jahreszeitabhängige Vorgaben an die Energieform Kälte festgelegt werden. Ferner können in Abhängigkeit einer Außentemperatur bestimmte Energieerzeuger einer Energieform gesperrt werden, sofern dies gemäß energieerzeugerspezifischen Kriterien EEK zulässig ist.

Die Energieerzeuger einer Energieform F1-F3 können in parallel und unabhängig voneinander steuerbare Kaskaden eingeteilt sein. Entsprechend können Kriterien festgelegt werden, die pro Kaskade ausgewertet werden. Solche Kaskaden-Kriterien können beispielsweise Einschaltintegrale und/oder Ausschaltintegrale vorgegeben. Hierdurch wird beispielsweise ein Energieerzeuger bei Durchführen eines Laufzeitausgleichs mit einem weiteren Energieerzeuger daran gehindert, sofort nach Tauschen der Schaltreihenfolge auszuschalten, um ein Abfallen einer Regelgröße unter einen vorgegebenen Sollwert zu verhindern. Der Energieerzeuger, der durch den Laufzeitausgleich an einer hinteren Stelle innerhalb der jeweiligen Schaltreihenfolge rückt, kann noch so lange angeschaltet bleiben, bis der Istwert der entsprechenden Regelgröße nach einer bestimmten Zeit über einen Schwellwert steigt.

Innerhalb einer Energieform F1-F3 kann ein Kaskadenkoordinator KK dafür sorgen, die Forderungen aus den einzelnen Kaskaden zusammenzuführen. Somit können Kriterien innerhalb einer Energieform koordiniert werden, so dass keine widersprüchlichen Schaltforderungen oder Sollwertvorgaben an die Energieerzeuger innerhalb einer Energieform F1-F3 ausgegeben werden.

An nächster Stelle koordiniert die Koordiniereinheit K die jeweiligen Kriterien beziehungsweise Schaltforderungen und Sollwertvorgaben aus den drei Energieformen F1-F3. Die Koordiniereinheit K kann hierbei Konflikte zwischen den Schaltforderungen und Sollwertvorgaben aus den drei Energieformen F1-F3 gemäß einer Priorisierung der Energieformen F1-F3 lösen.

Entsprechend der in diesem Ausführungsbeispiel beschriebenen Reihenfolge der Prioritäten kann die Steuereinrichtung S ermitteln, welche Energieerzeuger zum Erfüllen einer Energiebereitstellungsanforderung EA zur Verfügung stehen. Ferner können Restriktionen an einzelnen Energieerzeuger beziehungsweise Energieformen F1-F3 mit unterschiedlich hoher Priorität berücksichtigt werden. Durch das Vorgeben der Kriterien kann eine Vielzahl von Betriebsarten und/oder Betriebszuständen einer multivalenten Energieversorgungsanlage in Abhängigkeit einer Vielzahl von Betriebsparametern, Energiebereitstellungsanforderungen EA und/oder äußerer Bedingungen bestimmt werden. Das erfindungsgemäße Verfahren kann somit einen besonders sicheren und effizienten Betrieb einer multivalenten Energieversorgungsanlage ermöglichen.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 10: Anforderungserfassungseinrichtung
- 11: Sollwertbestimmungseinrichtung
- 12: Sollwertausgabeeinrichtung
- 13: Einrichtung zum Erfassen von Restriktionen
- 14: Kriterienbestimmungseinrichtung
- V: Vorlauf
- R: Rücklauf
- S: Steuereinrichtung
- S1: erste Steuereinheit
- S2: zweite Steuereinheit
- S3: dritte Steuereinheit
- K: Koordiniereinheit
- P: Pufferspeicher
- R1: erste Regeleinrichtung
- R2: zweite Regeleinrichtung
- R3: dritte Regeleinrichtung
- R4: vierte Regeleinrichtung
- R5: fünfte Regeleinrichtung
- E1: erster Energieerzeuger
- E2: zweiter Energieerzeuger
- E3: dritter Energieerzeuger
- E4: vierter Energieerzeuger
- E5: fünfter Energieerzeuger
- G1: erster Gaskessel
- G2: zweiter Gaskessel
- 01: erster Ölkessel
- 02: zweiter Ölkessel
- B1: erstes BHKW
- B2: zweites BHKW
- H1: erster Holzkessel
- H2: zweiter Holzkessel
- W1: Wärmepumpe
- GR1: erste Gruppe
- GR2: zweite Gruppe
- GR3: dritte Gruppe
- F1: erste Energieform (Wärme)

- F2: zweite Energieform (elektrische Energie)
- F3: dritte Energieform (Kälte)
- EEK: energieerzeugerspezifische Kriterien
- AK: anlagenspezifische Kriterien
- EFK: energieformspezifische Erzeugerkriterien
- KK: Kaskadenkoordinator

## Patentansprüche

1. Verfahren zum Steuern einer multivalenten Energieversorgungsanlage, wobei die multivalente Energieversorgungsanlage mindestens umfasst:
- mindestens zwei Energieerzeuger (E1-E5, B1, B2, G1, G2, H1, H2, O1, O2, W1), die mindestens zwei verschiedene Energieträger nutzen, um mindestens zwei der Energieformen Wärme, Kälte und elektrische Energie bereitzustellen;
- je Energieerzeuger eine Regeleinrichtung (R1-R5) zum Regeln von Regelgrößen des Energieerzeugers (E1-E5, B1, B2, G1, G2, H1, H2, O1, O2, W1); und
- wobei jeder Energieerzeuger (E1-E5, B1, B2, G1, G2, H1, H2, O1, O2, W1) drei mögliche Schaltzustände einnehmen kann: der Energieerzeuger (E1-E5, B1, B2, G1, G2, H1, H2, O1, O2, W1) muss eingeschaltet sein, der Energieerzeuger (E1-E5, B1, B2, G1, G2, H1, H2, O1, O2, W1) muss ausgeschaltet sein, der Energieerzeuger (E1-E5, B1, B2, G1, G2, H1, H2, O1, O2, W1) darf eingeschaltet oder ausgeschaltet sein;
- eine Steuereinrichtung (S) zum koordinierten Steuern der Regeleinrichtungen (R1-R5), wobei die Steuereinrichtung (S) die folgenden Verfahrensschritte ausführt:
- Erfassen mindestens einer Energiebereitstellungsanforderung (EA) für jeweils mindestens zwei der Energieformen Wärme, Kälte und elektrische Energie;
- für jeden der Energieerzeuger (E1-E5, B1, B2, G1, G2, H1, H2, O1, O2, W1), Ermitteln, ob ein energieerzeugerspezifisches Kriterium (EEK) vorliegt, welches für den Energieerzeuger (E1-E5, B1, B2, G1, G2, H1, H2, O1, O2, W1) genau einen der drei möglichen Schaltzustände festlegt;
- **gekennzeichnet durch** Bestimmen, ob für einen Energieerzeuger (E1-E5, B1, B2, G1, G2, H1, H2, O1, O2, W1) mehr als eine Energiebereitstellungsanforderung (EA) vorliegt;
- falls für einen Energieerzeuger (E1-E5, B1, B2, G1, G2, H1, H2, O1, O2, W1) mehr als eine Energiebereitstellungsanforderung (EA) vorliegt: Bestimmen, welche der Energiebereitstellungsanforderungen (EA) prioritär behandelt werden soll;
- für jeden Energieerzeuger (E1-E5, B1, B2, G1, G2, H1, H2, O1, O2, W1), Bestimmen von Sollwerten (SW) zum Erfüllen der mindestens einen Energiebereitstellungsanforderung (EA) in Abhängigkeit der prioritären Energiebereitstellungsanforderung (EA) und des energieerzeugerspezifischen Kriteriums (EEK); und
- Ausgeben der Sollwerte (SW) an die Regeleinrichtungen (R1-R5).

2. Verfahren nach Anspruch 1, wobei die Steuereinrichtung (S) ferner eine Reihenfolge des Einschaltens und/oder Ausschaltens der Energieerzeuger (E1-E5, B1, B2, G1, G2, H1, H2, O1, O2, W1) erfasst und das Bestimmen der Sollwerte (SW) in Abhängigkeit der Reihenfolge erfolgt.

3. Verfahren nach mindestens einem der vorhergehenden Ansprüche, wobei mindestens ein Energieerzeuger (E1-E5, B1, B2, G1, G2, H1, H2, O1, O2, W1) zum Erfüllen einer Mindestenergieanforderung verwendet wird.

4. Verfahren nach mindestens einem der vorhergehenden Ansprüche, wobei mindestens ein Energieerzeuger (E1-E5, B1, B2, G1, G2, H1, H2, O1, O2, W1) zum Erfüllen einer Maximalenergieanforderung verwendet wird.

5. Verfahren nach mindestens einem der vorhergehenden Ansprüche, wobei die Steuereinrichtung (S) ferner die folgenden Schritte ausführt:
- Erfassen, von jeder der Regeleinrichtungen (R1-R5), von Restriktionen bezüglich der Regelgrößen des jeweiligen Energieerzeugers (E1-E5, B1, B2, G1, G2, H1, H2, O1, O2, W1) von jeder der Regeleinrichtungen (R1-R5), wobei die Restriktionen Minimal- und/oder Maximalwerte einer durch den Energieerzeuger (E1-E5, B1, B2, G1, G2, H1, H2, O1, O2, W1) bereitgestellten Leistung betreffen und/oder angeben, ob der betreffende Energieerzeuger (E1-E5, B1, B2, G1, G2, H1, H2, O1, O2, W1) eingeschaltet oder ausgeschaltet sein muss;
- Erfassen, von jeder der Regeleinrichtungen (R1-R5), von spezifischen Eigenschaften hinsichtlich einer Leistungsabgabe des jeweiligen Energieerzeugers (E1-E5, B1, B2, G1, G2, H1, H2, O1, O2, W1), die angeben wie ein Energieerzeuger (E1-E5, B1, B2, G1, G2, H1, H2, O1, O2, W1) auf eine Regelgrößenänderung reagiert;
- Bestimmen einer Reihenfolge des Einschaltens und/oder Ausschaltens der Energieerzeuger (E1-E5, B1, B2, G1, G2, H1, H2, O1, O2, W1) in Abhängigkeit der Restriktionen und/oder der spezifischen Eigenschaften der Energieerzeuger (E1-E5, B1, B2, G1, G2, H1, H2, O1, O2, W1);
- Bestimmen von -Sollwerten für jeden Energieerzeuger (E1-E5, B1, B2, G1, G2, H1, H2, O1, O2, W1) zum Erfüllen der mindestens einen Energiebereitstellungsanforderung (EA) in Abhängigkeit der Reihenfolge des Einschaltens und/oder Ausschaltens.

6. Verfahren nach mindestens einem der vorhergehenden Ansprüche, wobei die Steuereinrichtung (S) ferner die folgenden Schritte ausführt:
- Erfassen, ob eine Energiebereitstellungsanforderung (EA) zum Bereitstellen von Wärme und elektrischer Energie vorliegt;
- Ermitteln, ob einer der Energieerzeuger (E1-E5, B1, B2, G1, G2, H1, H2, O1, O2, W1) Wärme und elektrische Energie bereitstellen kann;
- Bestimmen von Sollwerten (SW) für den Energieerzeuger (E1-E5, B1, B2, G1, G2, H1, H2, O1, O2, W1) zum Bereitstellen von Wärme und elektrischer Energie in Abhängigkeit der mindestens einen Energiebereitstellungsanforderung (EA).

7. Steuereinrichtung (S) zum Steuern einer multivalenten Energieversorgungsanlage, wobei die multivalente Energieversorgungsanlage mindestens umfasst:
- mindestens zwei Energieerzeuger (E1-E5, B1, B2, G1, G2, H1, H2, O1, O2, W1), die mindestens zwei verschiedene Energieträger nutzen, um mindestens zwei der Energieformen Wärme, Kälte und elektrische Energie bereitzustellen; und
- je Energieerzeuger (E1-E5, B1, B2, G1, G2, H1, H2, O1, O2, W1) eine Regeleinrichtung (R1-R5) zum Regeln von Regelgrößen des Energieerzeugers;
- wobei jeder Energieerzeuger (E1-E5, B1, B2, G1, G2, H1, H2, O1, O2, W1) drei mögliche Schaltzustände einnehmen kann: der Energieerzeuger (E1-E5, B1, B2, G1, G2, H1, H2, O1, O2, W1) muss eingeschaltet sein, der Energieerzeuger (E1-E5, B1, B2, G1, G2, H1, H2, O1, O2, W1) muss ausgeschaltet sein, der Energieerzeuger (E1-E5, B1, B2, G1, G2, H1, H2, O1, O2, W1) darf eingeschaltet oder ausgeschaltet sein;
- wobei die Steuereinrichtung (S) umfasst:
∘ eine Anforderungserfassungseinrichtung (10) zum Erfassen mindestens einer Energiebereitstellungsanforderung (EA) für jeweils mindestens zwei der Energieformen (F1-F3) Wärme, Kälte und elektrische Energie;
∘ eine Kriterienbestimmungseinrichtung (14), die dafür ausgelegt ist, für jeden der Energieerzeuger (E1-E5, B1, B2, G1, G2, H1, H2, O1, O2, W1) zu bestimmen, ob ein energieerzeugerspezifisches Kriterium (EEK) vorliegt, welches für den Energieerzeuger (E1-E5, B1, B2, G1, G2, H1, H2, O1, O2, W1) genau einen der drei möglichen Schaltzustände festlegt;
∘ eine Sollwertbestimmungseinrichtung (11), die dafür ausgelegt ist, für jeden Energieerzeuger (E1-E5, B1, B2, G1, G2, H1, H2, O1, O2, W1) Sollwerte (SW) zum Erfüllen der Energiebereitstellungsanforderung (EA) in Abhängigkeit der des energieerzeugerspezifischen Kriteriums (EEK) zu bestimmen;
∘ eine Sollwertausgabeeinrichtung (12) zum Ausgeben der Sollwerte (SW) an die Regeleinrichtungen (R1-R5); **gekennzeichnet durch**
∘ eine Koordiniereinheit (K), die dazu ausgelegt ist, Schaltforderungen und/oder Sollwertvorgaben aus den drei Energieformen (F1-F3) gemäß einer Priorisierung der Energieformen (F1-F3) an die Sollwertausgabeeinrichtung (12) auszugeben.

8. Steuereinrichtung (S) nach Anspruch 7, wobei die Steuereinrichtung (S) ferner eine Einrichtung (13) zum Erfassen von Restriktionen umfasst, wobei die Restriktionen Minimal- und/oder Maximalwerte einer durch einen Energieerzeuger (E1-E5, B1, B2, G1, G2, H1, H2, O1, 02, W1) bereitgestellten Leistung betreffen.

## Claims

1. A method of controlling a multivalent energy supply system, said multivalent energy supply system comprising at least:
- at least two energy generators (E1-E5, B1, B2, G1, G2, H1, H2, O1, O2, W1) using at least two different energy carriers to provide at least two of the energy forms of heat, cold, and electrical energy;
- for each energy generator, a closed-loop controller (R1-R5) for controlling controlled variables of said energy generator (E1-E5, B1, B2, G1, G2, H1, H2, O1, O2, W1); and
- each energy generator (E1-E5, B1, B2, G1, G2, H1, H2, O1, O2, W1) being able to assume three possible switching states: the energy generator (E1-E5, B1, B2, G1, G2, H1, H2 , O1, O2, W1) must be switched on, the energy generator (E1-E5, B1, B2, G1, G2, H1, H2, O1, O2, W1) must be switched off, the energy generator (E1-E5, B1, B2 , G1, G2, H1, H2, O1, O2, W1) may be switched on or off;
- a control device (S) for coordinatedly controlling the closed-loop controllers (R1-R5), wherein said control device (S) performs the following method steps:
- detecting at least one energy supply request (EA) for at least two of the energy forms of heat, cold, and electrical energy;
- for each energy generator (E1-E5, B1, B2, G1, G2, H1, H2, O1, O2, W1), determining if there is an energy-generator-specific criterion (EEK) specifying exactly one of the three possible switching states for the energy generator (E1-E5, B1, B2, G1, G2, H1, H2, O1, O2, W1);
**characterized by**
- determining whether there is more than one energy supply request (EA) for an energy generator (E1-E5, B1, B2, G1, G2, H1, H2, O1, O2, W1);
- if there is more than one energy supply request (EA) for an energy generator (E1-E5, B1, B2, G1, G2, H1, H2, O1, O2, W1): determining which of said energy supply requests (EA) should be prioritized;
- for each energy generator (E1-E5, B1, B2, G1, G2, H1, H2, O1, O2, W1), determining target values (SW) for meeting the at least one energy supply request (EA) depending on the prioritized energy supply requirement (EA) and the energy-generator-specific criterion (EEK); and
- outputting said target values (SW) to said closed-loop controllers (R1-R5).

2. The method of claim 1, wherein said control device (S) further detects a sequence of switching on and/or switching off said energy generators (E1-E5, B1, B2, G1, G2, H1, H2, O1, O2, W1), and determining said target values (SW) depending on said sequence.

3. The method according to at least one of the preceding claims, wherein at least one energy generator (E1-E5, B1, B2, G1, G2, H1, H2, O1, O2, W1) is used to meet a minimum energy request.

4. The method according to at least one of the preceding claims, wherein at least one energy generator (E1-E5, B1, B2, G1, G2, H1, H2, O1, O2, W1) is used to meet a maximum energy request.

5. The method according to at least one of the preceding claims, wherein said control device (S) further performs the following steps:
- detecting, from each of said closed-loop controllers (R1-R5), restrictions with respect to the controlled variables of the respective energy generator (E1-E5, B1, B2, G1, G2, H1, H2, O1, O2, W1) from each of said closed-loop controllers (R1-R5), said restrictions relating to minimum and/or maximum values of a power provided by the energy generator (E1-E5, B1, B2, G1, G2, H1, H2, O1, O2, W1) and/or indicating whether the respective energy generator (E1-E5, B1, B2, G1, G2, H1, H2, O1, O2, W1) must be switched on or off;
- detecting, from each of said closed-loop controllers (R1-R5), specific properties with regard to a power output of the respective energy generator (E1-E5, B1, B2, G1, G2, H1, H2, O1, O2, W1), said properties indicating how an energy generator (E1-E5, B1, B2, G1, G2, H1, H2, O1, O2, W1) responds to a change in the controlled variable;
- determining a sequence of switching on and/or switching off said energy generators (E1-E5, B1, B2, G1, G2, H1, H2, O1, O2, W1) depending on said restrictions and/or said specific properties of said energy generators (E1- E5, B1, B2, G1, G2, H1, H2, O1, O2, W1);
- determining target values for each energy generator (E1-E5, B1, B2, G1, G2, H1, H2, O1, O2, W1) for meeting the at least one energy supply request (EA) depending on said sequence of switching on and/or switching off.

6. The method according to at least one of the preceding claims, wherein said control device (S) further performs the following steps:
- detecting if there is an energy supply request (EA) for providing heat and electrical energy;
- determining if one of said energy generators (E1-E5, B1, B2, G1, G2, H1, H2, O1, O2, W1) can provide heat and electrical energy;
- determining target values (SW) for the energy generator (E1-E5, B1, B2, G1, G2, H1, H2, O1, O2, W1) for providing heat and electrical energy depending on the at least one energy supply request (EA).

7. A control device (S) for controlling a multivalent energy supply system, said multivalent energy supply system comprising at least:
- at least two energy generators (E1-E5, B1, B2, G1, G2, H1, H2, O1, O2, W1) using at least two different energy carriers to provide at least two of the energy forms of heat, cold, and electrical energy; and
- for each energy generator, a closed-loop controller (R1-R5) for controlling controlled variables of said energy generator (E1-E5, B1, B2, G1, G2, H1, H2, O1, O2, W1);
- each energy generator (E1-E5, B1, B2, G1, G2, H1, H2, O1, O2, W1) being able to assume three possible switching states: the energy generator (E1-E5, B1, B2, G1, G2, H1, H2 , O1, O2, W1) must be switched on, the energy generator (E1-E5, B1, B2, G1, G2, H1, H2, O1, O2, W1) must be switched off, the energy generator (E1-E5, B1, B2 , G1, G2, H1, H2, O1, O2, W1) may be switched on or off;
- said control device (S) comprising:
∘ a request detection device (10) for detecting at least one energy supply request (EA) for at least two of the energy forms (F1-F3) of heat, cold, and electrical energy;
∘ a criteria determination device (14) configured to determine, for each of the energy generators (E1-E5, B1, B2, G1, G2, H1, H2, O1, O2, W1), if there is an energy-generator-specific criterion (EEK) specifying exactly one of the three possible switching states for the energy generator (E1-E5, B1, B2, G1, G2, H1, H2, O1, O2, W1);
∘ a target value determination device (11) configured to determine, for each energy generator (E1-E5, B1, B2, G1, G2, H1, H2, O1, O2, W1), target values (SW) for meeting the energy supply request (EA) depending on said energy-generator-specific criterion (EEK);
∘ a target value output device (12) for outputting said target values (SW) to said closed-loop controllers (R1-R5);
**characterized by**
∘ a coordination unit (K) configured to output switching requests and/or target value specifications from the three energy forms (F1-F3) according to a prioritization of the energy forms (F1-F3) to said target value output device (12).

8. The control device (S) according to claim 7, wherein said control device (S) further comprises a device (13) for detecting restrictions, said restrictions relating to minimum and/or maximum values of a power provided by an energy generator (E1-E5, B1, B2, G1, G2, H1, H2, O1, O2, W1).

## Revendications

1. Procédé de commande d'une centrale d'alimentation en énergie polyvalente, ladite centrale d'alimentation en énergie polyvalente comprenant au moins :
- au moins deux générateurs d'énergie (E1-E5, B1, B2, G1, G2, H1, H2, O1, O2, W1), qui utilisent au moins deux sources d'énergie différentes pour fournir au moins deux des formes d'énergie parmi chaleur, froid et énergie électrique ;
- pour chaque générateur d'énergie, un système de réglage (R1-R5) pour régler des grandeurs de réglage du générateur d'énergie (E1-E5, B1, B2, G1, G2, H1, H2, O1, O2, W1) ; et
- chaque générateur d'énergie (E1-E5, B1, B2, G1, G2, H1, H2, O1, O2, W1) pouvant prendre trois états de commutation possibles; le générateur d'énergie (E1-E5, B1, B2, G1, G2, H1, H2, O1, O2, W1) doit être mis en marche, le générateur d'énergie (E1-E5, B1, B2, G1, G2, H1, H2, O1, O2, W1) doit être arrêté, le générateur d'énergie (E1-E5, B1, B2, G1, G2, H1, H2, O1, O2, W1) peut être mis en marche ou arrêté ;
- un système de commande (S) pour commander de manière coordonnée les systèmes de réglage (R1-R5), le système de commande (S) exécutant les étapes de procédé suivantes consistant à :
- détecter au moins un besoin en fourniture d'énergie (EA) pour respectivement au moins deux des formes d'énergie parmi chaleur, froid et énergie électrique ;
- pour chacun des générateurs d'énergie (E1-E5, B1, B2, G1, G2, H1, H2, O1, O2, W1), déterminer s'il existe un critère spécifique au générateur d'énergie (EEK) qui fixe précisément l'un des trois états de commutation possibles pour le générateur d'énergie (E1-E5, B1, B2, G1, G2, H1, H2, O1, O2, W1);
- **caractérisé en ce qu'**il faut déterminer si, pour un générateur d'énergie (E1-E5, B1, B2, G1, G2, H1, H2, O1, O2, W1), il existe plus d'un besoin en fourniture d'énergie (EA) ;
- au cas où il existe plus d'un besoin en fourniture d'énergie (EA) pour un générateur d'énergie (E1-E5, B1, B2, G1, G2, H1, H2, O1, O2, W1) ; déterminer lequel des besoins en fourniture d'énergie (EA) doit être traité en priorité ;
- pour chaque générateur d'énergie (E1-E5, B1, B2, G1, G2, H1, H2, O1, O2, W1), déterminer les valeurs de consigne (SW) pour satisfaire le au moins un besoin en fourniture d'énergie (EA), en fonction du besoin en fourniture d'énergie (EA) prioritaire et du critère spécifique au générateur d'énergie (EEK) ; et
- éditer des valeurs de consigne (SW) en direction des systèmes de réglages (R1-R5).

2. Procédé selon la revendication 1, dans lequel le système de commande (S) détecte en outre une série de mise en marche et/ou d'arrêt du générateur d'énergie (E1-E5, B1, B2, G1, G2, H1, H2, O1, O2, W1) et la détermination, des valeurs de consigne (SW) s'effectue en fonction de la série.

3. Procédé selon au moins l'une des revendications précédentes, dans lequel au moins un générateur d'énergie (E1-E5, B1, B2, G1, G2, H1, H2, O1, 02, W1) est utilisé pour satisfaire un besoin en énergie minimal.

4. Procédé selon au moins l'une des revendications précédentes, dans lequel au moins un générateur d'énergie (E1-E5, B1, B2, G1, G2, H1, H2, O1, O2, W1) est utilisé pour satisfaire un besoin en énergie maximal.

5. Procédé selon au moins l'une des revendications précédentes, dans lequel le système de commande (S) exécute en outre les étapes suivantes consistant à :
- détecter, par chacun des systèmes de réglage (R1-R5), des restrictions eu égard aux grandeurs de réglage du générateur d'énergie respectif (E1-E5, B1, B2, G1, G2, H1, H2, O1, O2, W1) par chacun des systèmes de réglage (R1-R5), les restrictions concernant et/ou indiquant des valeurs minimales et/ou maximales d'une puissance fournie par le générateur d'énergie (E1-E5, B1, B2, G1, G2, H1, H2, O1, O2, W1) pour savoir si le générateur d'énergie concerné (E1-E5, B1, B2, G1, G2, H1, H2, O1, O2, W1) doit être mis en marche ou arrêté ;
- détecter, par chacun des systèmes de réglage (R1-R5), des propriétés spécifiques en ce qui concerne l'émission de puissance du générateur d'énergie respectif (E1-E5, B1, B2, G1, G2, H1, H2, O1, O2, W1) qui indiquent comment un générateur d'énergie (E1-E5, B1, B2, G1, G2, H1, H2, O1, O2, W1) réagit à une variation de grandeurs de réglage ;
- déterminer une série de mise en marche et/ou d'arrêt du générateur d'énergie (E1-E5, B1, B2, G1, G2, H1, H2, O1, O2, W1) en fonction des restrictions et/ou des propriétés spécifiques du générateur d'énergie (E1-E5, B1, B2, G1, G2, H1, H2, O1, O2, W1) ;
- déterminer des valeurs de consigne pour chaque générateur d'énergie (E1-E5, B1, B2, G1, G2, H1, H2, O1, O2, W1) pour satisfaire le au moins un besoin en fourniture d'énergie (EA) en fonction de la série de mise en marche et/ou d'arrêt.

6. Procédé selon au moins l'une des revendications précédentes, dans lequel le système de commande (S) exécute en outre les étapes suivantes consistant à :
- détecter s'il existe un besoin en fourniture d'énergie (EA) pour la fourniture de chaleur et d'énergie électrique ;
- déterminer si l'un des générateurs d'énergie (E1-E5, B1, B2, G1, G2, H1, H2, O1, O2, W1) peut fournir de la chaleur et de l'énergie électrique ;
- déterminer des valeurs de consigne (SW) pour le générateur d'énergie (E1-E5, B1, B2, G1, G2, H1, H2, O1, O2, W1) pour la fourniture de chaleur et d'énergie électrique en fonction du au moins un besoin en fourniture d'énergie (EA).

7. Système de commande (S) pour commander une centrale d'alimentation en énergie polyvalente, ladite centrale d'alimentation en énergie polyvalente comprenant au moins :
- au moins deux générateurs d'énergie (E1-E5, B1, B2, G1, G2, H1, H2, O1, O2, W1), qui utilisent au moins deux sources d'énergie différentes pour fournir au moins deux des formes d'énergie parmi chaleur, froid et énergie électrique ; et
- pour chaque générateur d'énergie (E1-E5, B1, B2, G1, G2, H1, H2, O1, O2, W1), un système de réglage (R1-R5) pour régler des grandeurs de réglage du générateur d'énergie ;
- chaque générateur d'énergie (E1-E5, B1, B2, G1, G2, H1, H2, O1, O2, W1) pouvant prendre trois états de commutation possibles; le générateur d'énergie (E1-E5, B1, B2, G1, G2, H1, H2, O1, O2, W1) doit être mis en marche, le générateur d'énergie (E1-E5, B1, B2, G1, G2, H1, H2, O1, O2, W1) doit être arrêté, le générateur d'énergie (E1-E5, B1, B2, G1, G2, H1, H2, O1, O2, W1) peut être mis en marche ou arrêté ;
- le système de commande (S) comprenant :
o un système de détection des besoins (10) pour détecter au moins un besoin en fourniture d'énergie (EA) pour respectivement au moins deux des formes d'énergie (F1-F3) parmi chaleur, froid et énergie électrique ;
∘ un système de détermination des critères (14) qui est conçu pour déterminer pour chacun des générateurs d'énergie (E1-E5, B1, B2, G1, G2, H1, H2, O1, O2, W1) s'il existe un critère spécifique au générateur d'énergie (EEK) qui fixe précisément l'un des trois états de commutation possibles pour le générateur d'énergie (E1-E5, B1, B2, G1, G2, H1, H2, O1, O2, W1) ;
∘ un système de détermination de la valeur de consigne (11) qui est conçu pour déterminer pour chaque générateur d'énergie (E1-E5, B1, B2, G1, G2, H1, H2, O1, O2, W1), les valeurs de consigne (SW) pour satisfaire le besoin en fourniture d'énergie (EA), en fonction du critère spécifique au générateur d'énergie (EEK) ;
∘ un système d'édition de valeurs de consigne (12) pour éditer les valeurs de consigne (SW) en direction des systèmes de réglage (R1-R5) ; **caractérisé par**
∘ une unité de coordination (K) qui est conçue pour éditer des exigences de commutation et/ou des valeurs de consigne prédéfinies à partir des trois formes d'énergie (F1-F3) selon une priorisation des formes d'énergie (F1-F3) en direction du système d'édition de valeurs de consignes (12).

8. Système de commande (S) d'après la revendication 7, où ledit système de commande (S) comprend en outre un système (13) pour détecter des restrictions, les restrictions concernant des valeurs minimales et/ou maximales d'une puissance fournie par un générateur d'énergie (E1-E5, B1, B2, G1, G2, H1, H2, O1, O2, W1).
